(19) **Europäisches Patentamt / European Patent Office / Office européen des brevets**

(11) **EP 4 773 472 A1**

(12) **EUROPEAN PATENT APPLICATION**
published in accordance with Art. 153(4) EPC

(43) Date of publication:
**08.07.2026  Bulletin 2026/28**

(21) Application number: **24864629.1**

(22) Date of filing: **10.09.2024**

(51) International Patent Classification (IPC):
**H02J 50/20** (2016.01)

(52) Cooperative Patent Classification (CPC):
**H02J 50/20; H02J 50/70; H02J 50/90**

(86) International application number:
**PCT/CN2024/118080**

(87) International publication number:
**WO 2025/055913 (20.03.2025 Gazette 2025/12)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.09.2023  CN 202311199967**

(71) Applicant: **HUAWEI TECHNOLOGIES CO., LTD.
Shenzhen 518129 (CN)**

(72) Inventors:
• **WU, Fangzhou
Shenzhen, Guangdong 518129 (CN)**
• **DONG, Pengpeng
Shenzhen, Guangdong 518129 (CN)**
• **ZHU, Huiying
Shenzhen, Guangdong 518129 (CN)**

(74) Representative: **Körber, Martin Hans
Mitscherlich PartmbB
Karlstraße 7
80333 München (DE)**

(54) **WIRELESS ENERGY-CHARGING METHOD AND COMMUNICATION APPARATUS**

(57)    This application discloses a wireless energy charging method and a communication apparatus. The wireless energy charging method includes: A terminal device sends a first signal to a network device, and the network device obtains the first signal, and sends at least one energy charging signal, so that the terminal device obtains energy from the at least one energy charging signal. The first signal includes a first modulation symbol sequence, the energy charging signal includes a second modulation symbol sequence, and the second modulation symbol sequence is obtained by conjugating at least one modulation symbol in the first modulation symbol sequence. In this application, the network device uses the second modulation symbol sequence obtained by conjugating the at least one modulation symbol from the terminal device as a modulation symbol of the energy charging signal. Therefore, wireless energy charging can be implemented without precoding, and processing complexity is low.

FIG. 3

EP 4 773 472 A1

**Description**

CROSS-REFERENCE TO RELATED APPLICATIONS

This application claims priority to Chinese Patent Application No. 202311199967.2, filed with the China National Intellectual Property Administration on September 15, 2023 and entitled "WIRELESS ENERGY CHARGING METHOD AND COMMUNICATION APPARATUS", which is incorporated herein by reference in its entirety.

TECHNICAL FIELD

This application relates to the field of energy charging technologies, and in particular, to a wireless energy charging method and a communication apparatus.

BACKGROUND

Wireless energy transfer (wireless energy transfer, WPT) is one of important ways to address an insufficient battery level of a terminal device. A base station may be used as a device for providing energy. For example, the base station sends an energy charging signal, and a terminal device around the base station may obtain energy from the energy charging signal. Currently, most energy charging signals sent by the base station to the terminal device need to be precoded, and processing complexity is high.

SUMMARY

This application provides a wireless energy charging method and a communication apparatus, to reduce signal processing complexity in wireless energy transfer.

To achieve the foregoing objectives, the following technical solutions are used in embodiments of this application.

According to a first aspect, an embodiment of this application provides a wireless energy charging method. The method may be performed by a first communication apparatus. The first communication apparatus may be a network device, or the first communication apparatus is a component configured to implement a function of the network device. For example, the first communication apparatus is a unit/module, a circuit, or a chip in the network device. The following describes the method provided in the first aspect by using an example in which the first communication apparatus is the network device. A person skilled in the art may understand that the following method provided in the first aspect may also be implemented by the unit/module, the circuit, the chip, or the like in the network device.

The energy charging method includes: The network device obtains a first signal, and sends at least one energy charging signal. The first signal includes a first modulation symbol sequence. The energy charging signal includes a second modulation symbol sequence, and the second modulation symbol sequence is obtained based on a result of conjugating at least one modulation symbol in the first modulation symbol sequence.

In this solution, the first signal is from a to-be-charged device, for example, a terminal device. The network device may conjugate the at least one modulation symbol from the terminal device, and use the second modulation symbol sequence obtained by conjugation as a modulation symbol of the energy charging signal, so that wireless energy charging can be implemented even if no precoding is performed. Processing complexity of implementing wireless energy charging according to this solution is low.

In an implementation, that the second modulation symbol sequence is obtained based on the result of conjugating the at least one modulation symbol in the first modulation symbol sequence includes but is not limited to the following several implementation forms. A specific implementation form is not limited in this embodiment of this application.

Implementation form 1: A first modulation symbol in the second modulation symbol sequence is a conjugate of a second modulation symbol in the first modulation symbol sequence. This is simple.

Implementation form 2: The first modulation symbol in the second modulation symbol sequence is obtained by performing conjugation and amplitude scaling on the second modulation symbol in the first modulation symbol sequence. In Implementation form 2, transmit power of the second modulation symbol sequence may be flexibly adjusted by amplitude scaling, so that power of the energy charging signal is higher, and the terminal device can collect higher power, to achieve better energy charging effect.

Implementation form 3: The second modulation symbol sequence is obtained by performing conjugation and weighted averaging on at least two modulation symbols in the first modulation symbol sequence. Implementation form 3 can reduce noise, so that a signal-to-noise ratio of the second modulation symbol sequence is higher, and therefore, power of the energy charging signal generated based on the second modulation symbol sequence is higher, and energy charging effect is better.

In an implementation, that the second modulation symbol sequence is obtained based on the result of conjugating the at least one modulation symbol in the first modulation symbol sequence further includes: the second modulation symbol sequence is obtained by conjugating at least two modulation symbols in the first modulation symbol sequence and then performing sequence reversal.

In this implementation, a conjugation process includes sequence reversal. The second modulation symbol sequence is obtained by conjugating the at least two modulation symbols in the first modulation symbol sequence and then performing sequence reversal, so that the second modulation symbol sequence can implement energy focusing in a time dimension, to improve energy charging effect.

In an implementation, the first modulation symbol sequence is a modulation symbol sequence obtained by performing channel estimation on the first signal. For example, each modulation symbol in the first modulation symbol sequence is a channel fading value obtained by channel estimation. Before the first modulation symbol sequence is obtained, channel estimation is performed on the first signal to reduce interference and noise impact, so that noise of the obtained first modulation symbol sequence is low. According to this solution, noise of the second modulation symbol sequence obtained based on the first modulation symbol sequence is also low, so that power of the energy charging signal generated based on the second modulation symbol sequence is high, and energy charging effect is good.

In an implementation, the method further includes: The network device receives first indication information, where the first indication information indicates that the first signal is used to request energy charging.

By using the first indication information, the network device can clearly determine that the first signal is used to request energy charging, to avoid a case in which the network device cannot charge energy to the terminal device because the network device incorrectly understands the first signal.

In an implementation, the first signal is carried on a first time-frequency resource, and the first time-frequency resource is used to transmit an energy charging request signal.

In this solution, the resource carrying the first signal indicates that the first signal is used to request energy charging, and no additional signaling is required for indication. This can reduce signaling overheads.

In an implementation, the method further includes: The network device sends configuration information, where the configuration information indicates a second time-frequency resource, and the second time-frequency resource is used to transmit an energy charging request signal.

In this solution, the network device configures, for the terminal device, the resource used to transmit the energy charging request signal, to avoid a case in which some resources are always occupied by one or some terminal devices, and another terminal device cannot request energy charging because the terminal device cannot use the resources.

In an implementation, each modulation symbol in the first modulation symbol sequence is a superposition of modulation symbols from a plurality of terminal devices.

When the plurality of terminal devices need to be charged, the network device may superimpose and conjugate the plurality of modulation symbols, and use a finally obtained modulation symbol as a modulation symbol of the energy charging signal. According to this solution, energy can be simultaneously charged to the plurality of terminal devices without a need to separately send an energy charging signal to each terminal device, to further reduce resource overheads.

In an implementation, the method further includes: The network device sends a second signal, where the first signal is a reflected signal of the second signal.

In this solution, when the terminal device needs to be charged, the terminal device may reflect the second signal sent by the network device. The network device identifies the first signal. If the first signal is a reflected signal of the second signal, it is considered that the terminal device needs to be charged. The terminal device does not need to actively send a signal used to request energy charging. This is applicable to a terminal device (for example, a passive terminal device) whose battery level is insufficient to send the signal used to request energy charging, to broaden an application scope.

In an implementation, a subcarrier occupied by the first signal and a subcarrier occupied by the second signal are spaced by $k$ subcarriers, and $k$ is an integer. The terminal device may determine, based on the subcarrier occupied by the second signal, a frequency domain position to which the first signal is mapped, to avoid a resource conflict and reduce interference.

In an implementation, the method further includes: The network device sends second indication information, where the second indication information indicates $k$.

In this solution, the network device configures $k$, to avoid a resource conflict and reduce interference. For a plurality of different terminal devices, the network device may configure same $k$. In other words, a group of terminal devices correspond to same $k$. In this way, a wireless energy charging signal can be directed toward the group of terminal devices, to reduce or even avoid energy dispersion, and improve energy charging efficiency.

In an implementation, the first signal is from a plurality of terminal devices, the plurality of terminal devices include a first terminal device and a second terminal device, the first signal includes a first component and a second component, the first component corresponds to the first terminal device, and the second component corresponds to the second terminal device. A subcarrier occupied by the first component and the subcarrier occupied by the second signal are spaced by $k1$ subcarriers, a subcarrier occupied by the second component and the subcarrier occupied by the second signal are spaced by $k2$ subcarriers, $k1$ and $k2$ are different, and $k1$ and $k2$ are both integers.

In this solution, positions of frequency domain resources used by different terminal devices to reflect the second signal are different, to avoid a resource conflict and reduce interference.

In an implementation, the method further includes: The network device sends third indication information, where the third indication information indicates $k1$; and the network device sends fourth indication information, where the fourth indication information indicates $k2$.

In this solution, the network device configures $k1$ and/or $k2$. Positions of frequency domain resources used by different groups of terminal devices to reflect the second signal may be the same, so that the wireless energy charging signal is directed toward a group of terminal devices, to reduce or even avoid energy dispersion, and improve energy charging efficiency.

In an implementation, a time domain start position of the second modulation symbol sequence and a time domain end position of the first modulation symbol sequence are spaced by n symbols, and n is an integer greater than or equal to 0.

In this solution, a time domain start position of the energy charging signal is not limited. For example, the start position of the energy charging signal may be a time domain end position of the first signal. In this way, the second modulation symbol sequence is closer to the last modulation symbol in the first modulation symbol sequence, to improve energy charging effect and improve energy charging efficiency.

In an implementation, the method further includes: The network device sends fifth indication information, where the fifth indication information indicates n.

In this solution, the network device configures n, so that the time domain start position of the energy charging signal can be flexibly configured. For example, the time domain start position of the energy charging signal is close to the time domain end position of the first signal, to improve energy charging effect and energy charging efficiency. For another example, the time domain start position of the energy charging signal is far away from the time domain end position of the first signal, and a resource is preferentially reserved for service data, to reduce a transmission latency of the service data.

In an implementation, the second modulation symbol sequence is consecutive in time domain, to improve energy charging efficiency. Alternatively, the second modulation symbol sequence is discrete in time domain, and an earlier resource is reserved for the service data as much as possible, to reduce a transmission latency of the service data.

In an implementation, a subcarrier occupied by the second modulation symbol sequence and a subcarrier occupied by the first modulation symbol sequence are spaced by m subcarriers, and m is an integer.

In this solution, the network device may determine, based on the subcarrier occupied by the first modulation symbol sequence, a frequency domain position to which the second modulation symbol sequence is mapped. For example, m=0, a transmission channel of the second modulation symbol sequence is close to a transmission channel of the first modulation symbol sequence, and the two transmission channels are highly correlated, so that power of the energy charging signal generated based on the second modulation symbol sequence is higher, to achieve good energy charging effect.

In an implementation, the method further includes: The network device sends sixth indication information, where the sixth indication information indicates m.

In this solution, m is configured by the network device. This is more flexible and can reduce resource conflicts.

In an implementation, the first modulation symbol sequence occupies a plurality of subcarriers, and the second modulation symbol sequence occupies at least one of the plurality of subcarriers. In this solution, a subcarrier other than the at least one of the plurality of subcarriers can be used to transmit service data. The at least one subcarrier is flexibly scheduled, and conflicts between a subcarrier occupied by the energy charging signal and the subcarrier used to transmit the service data can be reduced.

In an implementation, the first modulation symbol in the first modulation symbol sequence is received through a $p^{th}$ antenna, and the second modulation symbol in the second modulation symbol sequence is sent through the $p^{th}$ antenna.

In this solution, an antenna that sends the first modulation symbol sequence is selected to send the second modulation symbol sequence. In this way, the transmission channel of the second modulation symbol sequence and the transmission channel of the first modulation symbol sequence are highly correlated, so that power of the energy charging signal is as high as possible, to achieve a good energy charging effect.

According to a second aspect, an embodiment of this application provides a wireless energy charging method. The method may be performed by a second communication apparatus. The second communication apparatus may be a terminal device, or the second communication apparatus is a component configured to implement a function of the terminal device. For example, the second communication apparatus is a unit/module, a circuit, or a chip in the terminal device. The following describes the method provided in the second aspect by using an example in which the second communication apparatus is the terminal device. A person skilled in the art may understand that the following method provided in the first aspect may also be implemented by the unit/module, the circuit, the chip, or the like in the terminal device.

The energy charging method includes: The terminal device sends a first signal, and receives at least one energy charging signal. The first signal includes a first modulation symbol sequence. The energy charging signal includes a second modulation symbol sequence, and the second modulation symbol sequence is obtained based on a result of conjugating at least one modulation symbol in the first modulation symbol sequence.

In an implementation, that the second modulation symbol sequence is obtained based on the result of conjugating the at least one modulation symbol in the first modulation symbol sequence includes: a first modulation symbol in the second modulation symbol sequence is a conjugate of a second modulation symbol in the first modulation symbol sequence; the first modulation symbol in the second modulation symbol sequence is obtained by performing conjugation and amplitude scaling on the second modulation symbol in the first modulation symbol sequence; or the second modulation symbol sequence is obtained by performing conjugation and weighted averaging on at least two modulation symbols in the first modulation symbol sequence.

In an implementation, that the second modulation symbol sequence is obtained based on the result of conjugating the at least one modulation symbol in the first modulation symbol sequence further includes: the second modulation symbol sequence is obtained by conjugating at least two modulation symbols in the first modulation symbol sequence and then performing sequence reversal.

In an implementation, the first modulation symbol sequence is a modulation symbol sequence obtained by performing channel estimation on the first signal.

In an implementation, the method further includes: The terminal device sends first indication information, where the first indication information indicates that the first signal is used to request energy charging.

In an implementation, the first signal is carried on a first time-frequency resource, and the first time-frequency resource is used to transmit an energy charging request signal.

In an implementation, the method further includes: The terminal device receives configuration information, where the configuration information indicates a second time-frequency resource, and the second time-frequency resource is used to transmit an energy charging request signal.

In an implementation, each modulation symbol in the first modulation symbol sequence is a superposition of modulation symbols from a plurality of terminal devices.

In an implementation, the first signal is a reflected signal of the second signal, and the second signal is from a network device.

In an implementation, a subcarrier occupied by the first signal and a subcarrier occupied by the second signal are spaced by $k$ subcarriers, and $k$ is an integer.

In an implementation, the method further includes: The terminal device receives second indication information, where the second indication information indicates $k$.

In an implementation, the first signal is from a plurality of terminal devices, the plurality of terminal devices include a first terminal device and a second terminal device, the first signal includes a first component and a second component, the first component corresponds to the first terminal device, and the second component corresponds to the second terminal device. A subcarrier occupied by the first component and the subcarrier occupied by the second signal are spaced by $k1$ subcarriers, a subcarrier occupied by the second component and the subcarrier occupied by the second signal are spaced by $k2$ subcarriers, $k1$ and $k2$ are different, and $k1$ and $k2$ are both integers.

In an implementation, the method further includes: The terminal device receives third indication information, where the third indication information indicates $k1$; and the terminal device receives fourth indication information, where the fourth indication information indicates $k2$.

In an implementation, a time domain start position of the second modulation symbol sequence and a time domain end position of the first modulation symbol sequence are spaced by n symbols, and n is an integer greater than or equal to 0.

In an implementation, the method further includes: The terminal device receives fifth indication information, where the fifth indication information indicates n.

In an implementation, the second modulation symbol sequence is consecutive in time domain, or the second modulation symbol sequence is discrete in time domain.

In an implementation, a subcarrier occupied by the second modulation symbol sequence and a subcarrier occupied by the first modulation symbol sequence are spaced by m subcarriers, and m is an integer.

In an implementation, the method further includes: The terminal device receives sixth indication information, where the sixth indication information indicates m.

In an implementation, the first modulation symbol sequence occupies a plurality of subcarriers, and the second modulation symbol sequence occupies at least one of the plurality of subcarriers.

In an implementation, the first modulation symbol in the first modulation symbol sequence is received through a $p^{th}$ antenna, and the second modulation symbol in the second modulation symbol sequence is sent through the $p^{th}$ antenna.

For beneficial effect of the second aspect and the implementations of the second aspect, refer to beneficial effect of the first aspect and the implementations of the first aspect. Details are not described herein again.

According to a third aspect, an embodiment of this application provides a wireless energy charging method. The method may be performed by a first communication apparatus. The first communication apparatus may be a network device, or the first communication apparatus is a component configured to implement a function of the network device. For example, the first communication apparatus is a unit/module, a circuit, or a chip in the network device. The following describes the method provided in the third aspect by using an example in which the first communication apparatus is the network device. A person skilled in the art may understand that the following method provided in the first aspect may also be implemented by the unit/module, the circuit, the chip, or the like in the network device.

The energy charging method includes: The network device receives a first signal, and sends at least one energy charging signal. The first signal is a reflected signal of a second signal sent by the network device. The first signal includes a first modulation symbol sequence. The energy charging signal includes a second modulation symbol sequence, and the second modulation symbol sequence is obtained based on a result of conjugating at least one modulation symbol in the first modulation symbol sequence.

In an implementation, that the second modulation symbol sequence is obtained based on the result of conjugating the at least one modulation symbol in the first modulation symbol sequence includes: a first modulation symbol in the second modulation symbol sequence is a conjugate of a second modulation symbol in the first modulation symbol sequence; the first modulation symbol in the second modulation symbol sequence is obtained by performing conjugation and amplitude scaling on the second modulation symbol in the first modulation symbol sequence; or the second modulation symbol sequence is obtained by performing conjugation and weighted averaging on at least two modulation symbols in the first modulation symbol sequence.

In an implementation, that the second modulation symbol sequence is obtained based on the result of conjugating the at least one modulation symbol in the first modulation symbol sequence further includes: the second modulation symbol sequence is obtained by conjugating at least two modulation symbols in the first modulation symbol sequence and then performing sequence reversal.

In an implementation, the first modulation symbol sequence is a modulation symbol sequence obtained by performing channel estimation on the first signal.

In an implementation, the method further includes: The network device receives first indication information, where the first indication information indicates that the first signal is used to request energy charging.

In an implementation, the first signal is carried on a first time-frequency resource, and the first time-frequency resource is used to transmit an energy charging request signal.

In an implementation, the method further includes: The network device sends configuration information, where the configuration information indicates a second time-frequency resource, and the second time-frequency resource is used to transmit an energy charging request signal.

In an implementation, each modulation symbol in the first modulation symbol sequence is a superposition of modulation symbols from a plurality of terminal devices.

In an implementation, a subcarrier occupied by the first signal and a subcarrier occupied by the second signal are spaced by $k$ subcarriers, and $k$ is an integer.

In an implementation, the method further includes: The network device sends second indication information, where the second indication information indicates $k$.

In an implementation, the first signal is from a plurality of terminal devices, the plurality of terminal devices include a first terminal device and a second terminal device, the first signal includes a first component and a second component, the first component corresponds to the first terminal device, and the second component corresponds to the second terminal device. A subcarrier occupied by the first component and the subcarrier occupied by the second signal are spaced by $k1$ subcarriers, a subcarrier occupied by the second component and the subcarrier occupied by the second signal are spaced by $k2$ subcarriers, $k1$ and $k2$ are different, and $k1$ and $k2$ are both integers.

In an implementation, the method further includes: The network device sends third indication information, where the third indication information indicates $k1$; and the network device sends fourth indication information, where the fourth indication information indicates $k2$.

In an implementation, a time domain start position of the second modulation symbol sequence and a time domain end position of the first modulation symbol sequence are spaced by n symbols, and n is an integer greater than or equal to 0.

In an implementation, the method further includes: The network device sends fifth indication information, where the fifth indication information indicates n.

In an implementation, the second modulation symbol sequence is consecutive in time domain, or the second modulation symbol sequence is discrete in time domain.

In an implementation, a subcarrier occupied by the second modulation symbol sequence and a subcarrier occupied by the first modulation symbol sequence are spaced by m subcarriers, and m is an integer.

In an implementation, the method further includes: The network device sends sixth indication information, where the sixth indication information indicates m.

In an implementation, the first modulation symbol sequence occupies a plurality of subcarriers, and the second modulation symbol sequence occupies at least one of the plurality of subcarriers.

In an implementation, the first modulation symbol in the first modulation symbol sequence is received through a $p^{th}$ antenna, and the second modulation symbol in the second modulation symbol sequence is sent through the $p^{th}$ antenna.

For beneficial effect of the third aspect and the implementations of the third aspect, refer to beneficial effect of the first aspect and the implementations of the first aspect. Details are not described herein again.

According to a fourth aspect, an embodiment of this application provides a wireless energy charging method. The method may be performed by a second communication apparatus. The second communication apparatus may be a terminal device, or the second communication apparatus is a component configured to implement a function of the terminal device. For example, the second communication apparatus is a unit/module, a circuit, or a chip in the terminal device. The following describes the method provided in the fourth aspect by using an example in which the second communication apparatus is the terminal device. A person skilled in the art may understand that the following method provided in the first aspect may also be implemented by the unit/module, the circuit, the chip, or the like in the terminal device.

The energy charging method includes: The terminal device receives a second signal, reflects the second signal, and receives at least one energy charging signal. The energy charging signal includes a second modulation symbol sequence, and the second modulation symbol sequence is obtained based on a result of conjugating at least one modulation symbol in the first modulation symbol sequence. The first modulation symbol sequence is included in a first signal. The first signal is a reflected signal of the second signal.

In an implementation, that the second modulation symbol sequence is obtained based on the result of conjugating the at least one modulation symbol in the first modulation symbol sequence includes: a first modulation symbol in the second modulation symbol sequence is a conjugate of a second modulation symbol in the first modulation symbol sequence; the first modulation symbol in the second modulation symbol sequence is obtained by performing conjugation and amplitude scaling on the second modulation symbol in the first modulation symbol sequence; or the second modulation symbol sequence is obtained by performing conjugation and weighted averaging on at least two modulation symbols in the first modulation symbol sequence.

In an implementation, that the second modulation symbol sequence is obtained based on the result of conjugating the at least one modulation symbol in the first modulation symbol sequence further includes: the second modulation symbol sequence is obtained by conjugating at least two modulation symbols in the first modulation symbol sequence and then performing sequence reversal.

In an implementation, the first modulation symbol sequence is a modulation symbol sequence obtained by performing channel estimation on the first signal.

In an implementation, the method further includes: The terminal device sends first indication information, where the first indication information indicates that the first signal is used to request energy charging.

In an implementation, the first signal is carried on a first time-frequency resource, and the first time-frequency resource is used to transmit an energy charging request signal.

In an implementation, the method further includes: The terminal device receives configuration information, where the configuration information indicates a second time-frequency resource, and the second time-frequency resource is used to transmit an energy charging request signal.

In an implementation, each modulation symbol in the first modulation symbol sequence is a superposition of modulation symbols from a plurality of terminal devices.

In an implementation, the first signal is a reflected signal of the second signal, and the second signal is from a network device.

In an implementation, a subcarrier occupied by the first signal and a subcarrier occupied by the second signal are spaced by $k$ subcarriers, and $k$ is an integer.

In an implementation, the method further includes: The terminal device receives second indication information, where the second indication information indicates $k$.

In an implementation, the first signal is from a plurality of terminal devices, the plurality of terminal devices include a first terminal device and a second terminal device, the first signal includes a first component and a second component, the first component corresponds to the first terminal device, and the second component corresponds to the second terminal device. A subcarrier occupied by the first component and the subcarrier occupied by the second signal are spaced by $k1$ subcarriers, a subcarrier occupied by the second component and the subcarrier occupied by the second signal are spaced by $k2$ subcarriers, $k1$ and $k2$ are different, and $k1$ and $k2$ are both integers.

In an implementation, the method further includes: The terminal device receives third indication information, where the third indication information indicates $k1$; and the terminal device receives fourth indication information, where the fourth indication information indicates $k2$.

In an implementation, a time domain start position of the second modulation symbol sequence and a time domain end position of the first modulation symbol sequence are spaced by n symbols, and n is an integer greater than or equal to 0.

In an implementation, the method further includes: The terminal device receives fifth indication information, where the fifth indication information indicates n.

In an implementation, the second modulation symbol sequence is consecutive in time domain, or the second modulation symbol sequence is discrete in time domain.

In an implementation, a subcarrier occupied by the second modulation symbol sequence and a subcarrier occupied by the first modulation symbol sequence are spaced by m subcarriers, and m is an integer.

In an implementation, the method further includes: The terminal device receives sixth indication information, where the sixth indication information indicates m.

In an implementation, the first modulation symbol sequence occupies a plurality of subcarriers, and the second modulation symbol sequence occupies at least one of the plurality of subcarriers.

In an implementation, the first modulation symbol in the first modulation symbol sequence is received through a $p^{th}$ antenna, and the second modulation symbol in the second modulation symbol sequence is sent through the $p^{th}$ antenna.

For beneficial effect of the fourth aspect and the implementations of the fourth aspect, refer to beneficial effect of the first aspect and the implementations of the first aspect. Details are not described herein again.

According to a fifth aspect, an embodiment of this application provides a communication apparatus. The communication apparatus has a function of implementing behavior in the method example in any one of the first aspect to the fourth aspect. For beneficial effect, refer to related descriptions of the first aspect to the fourth aspect. Details are not described herein again. For example, the communication apparatus may be the network device or the terminal device in any one of the first aspect to the fourth aspect. For another example, the communication apparatus may be an apparatus that can support the network device or the terminal device in implementing a function required in the method provided in any one of the first aspect to the fourth aspect. For example, the communication apparatus may be a chip or a chip system in the network device or the terminal device.

In a possible design, the communication apparatus includes a baseband apparatus and a radio frequency apparatus.

In a possible design, the communication apparatus includes a corresponding means (means) or module configured to perform the methods in the first aspect to the fourth aspect. For example, the communication apparatus includes a processing unit (also referred to as a processing module or a processor sometimes) and/or a transceiver unit (also referred to as a transceiver module or a transceiver sometimes). The transceiver unit can implement a sending function and a receiving function. When implementing the sending function, the transceiver unit may be referred to as a sending unit (also referred to as a sending module sometimes). When implementing the receiving function, the transceiver unit may be referred to as a receiving unit (also referred to as a receiving module sometimes). The sending unit and the receiving unit may be a same functional unit, the functional unit is referred to as the transceiver unit, and the functional unit can implement the sending function and the receiving function. Alternatively, the sending unit and the receiving unit may be different functional units, and the transceiver unit is a general term for these functional units. These units (modules) may perform corresponding functions in the method example in any one of the first aspect to the fourth aspect. For details, refer to the detailed descriptions in the method example. Details are not described herein again.

According to a sixth aspect, an embodiment of this application provides a communication apparatus. The communication apparatus may be the communication apparatus in the fifth aspect in the foregoing embodiments, or a chip or a chip system disposed in the communication apparatus in the fifth aspect. The communication apparatus includes a communication interface and a processor, and optionally, further includes a memory. The memory is configured to store a computer program, instructions, or data, and the processor is coupled to the memory and the communication interface. When the processor reads the computer program, the instructions, or the data, the communication apparatus is enabled to perform the method performed by the network device or the terminal device in the foregoing method embodiments. For example, the communication apparatus may be the network device or the terminal device, or the communication apparatus may be a functional module in the network device or the terminal device, for example, a baseband chip and a radio frequency chip.

According to a seventh aspect, an embodiment of this application provides a chip system. The chip system includes a processor, may further include a communication interface, and is configured to implement the method according to any one of the first aspect to the fourth aspect. Optionally, the chip system further includes a memory. The memory is configured to store a computer program (which may also be referred to as code or instructions). The processor is configured to: invoke the computer program from the memory, and run the computer program, to enable a device on which the chip system is installed to perform the method in any one of the first aspect and the implementations of the first aspect, enable a device on which the chip system is installed to perform the method in any one of the second aspect and the implementations of the second aspect, enable a device on which the chip system is installed to perform the method according to any one of the third aspect and the implementations of the third aspect, or enable a device on which the chip system is installed to perform the method according to any one of the fourth aspect and the implementations of the fourth aspect. The chip system may include a chip, or may include a chip and another discrete component.

According to an eighth aspect, an embodiment of this application provides a communication apparatus. The communication apparatus includes an input/output interface and a logic circuit. The input/output interface is configured to input and/or output information. The input/output interface may be an interface circuit, an output circuit, an input circuit, a pin, a related circuit, or the like. The logic circuit is configured to perform the method according to any one of the first aspect to the fourth aspect.

In a specific implementation process, the communication apparatus may be a chip, the input circuit may be an input pin, the output circuit may be an output pin, and the logic circuit may be a transistor, a gate circuit, a trigger, various logic circuits, and the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit. The circuit is used as the input circuit and the output circuit at different moments. Specific implementations of the input/output interface and the logic circuit are not limited in this application.

In an implementation, when the communication apparatus is a wireless communication device, the wireless communication device may be a terminal device such as a mobile phone. The interface circuit may be a radio frequency processing chip in the wireless communication device, and a processing circuit may be a baseband processing chip in the wireless communication device. Alternatively, the wireless communication device may be a network device such as a base station. The interface circuit may be a radio frequency processing chip in the wireless communication device, and a processing circuit may be a baseband processing chip in the wireless communication device.

According to a ninth aspect, an embodiment of this application provides a communication system. The communication system includes a network device and a terminal device. The network device is configured to implement a function of the method according to the first aspect, and the terminal device is configured to implement a function of the method according to the second aspect. Alternatively, the network device is configured to implement a function of the method according to the third aspect, and the terminal device is configured to implement a function of the method according to the fourth aspect.

According to a tenth aspect, an embodiment of this application provides a computer-readable storage medium. The computer-readable storage medium is configured to store a computer program or instructions. When the computer program or the instructions are run, the method according to any one of the first aspect and the implementations of the first aspect is implemented, the method according to any one of the second aspect and the implementations of the second aspect is implemented, the method according to any one of the third aspect and the implementations of the third aspect is implemented, or the method according to any one of the fourth aspect and the implementations of the fourth aspect is implemented.

According to an eleventh aspect, an embodiment of this application further provides a computer program product including instructions. When the instructions are run on a computer, the method according to any one of the first aspect and the implementations of the first aspect is implemented, the method according to any one of the second aspect and the implementations of the second aspect is implemented, the method according to any one of the third aspect and the implementations of the third aspect is implemented, or the method according to any one of the fourth aspect and the implementations of the fourth aspect is implemented.

For beneficial effect of the fifth aspect to the eleventh aspect and the implementations of the fifth aspect to the eleventh aspect, refer to descriptions of beneficial effect of any one of the first aspect to the fourth aspect and the implementations of the first aspect to the fourth aspect.

BRIEF DESCRIPTION OF DRAWINGS

FIG. 1 is a diagram of an architecture of a wireless energy charging system to which an embodiment of this application is applicable;
FIG. 2 is a schematic flowchart of communication between a network device and a terminal device according to an embodiment of this application;
FIG. 3 is a schematic flowchart of a wireless energy charging method 300 according to an embodiment of this application;
FIG. 4 is a diagram of a first modulation symbol sequence and a second modulation symbol sequence according to an embodiment of this application;
FIG. 5 is another diagram of a first modulation symbol sequence and a second modulation symbol sequence according to an embodiment of this application;
FIG. 6 is a first diagram of time-frequency resources occupied by a first modulation symbol sequence and a second modulation symbol sequence according to an embodiment of this application;
FIG. 7 is a second diagram of time-frequency resources occupied by a first modulation symbol sequence and a second modulation symbol sequence according to an embodiment of this application;
FIG. 8 is a third diagram of time-frequency resources occupied by a first modulation symbol sequence and a second modulation symbol sequence according to an embodiment of this application;
FIG. 9 is a fourth diagram of time-frequency resources occupied by a first modulation symbol sequence and a second modulation symbol sequence according to an embodiment of this application;
FIG. 10 is a schematic flowchart of a wireless energy charging method 1000 according to an embodiment of this application;
FIG. 11 is a schematic flowchart of a wireless energy charging method 1100 according to an embodiment of this application;
FIG. 12 is a diagram of frequency domain positions of a first signal and a second signal according to an embodiment of this application;

FIG. 13 is another diagram of frequency domain positions of a first signal and a second signal according to an embodiment of this application;

FIG. 14 is a diagram of a structure of a communication apparatus according to an embodiment of this application; and

FIG. 15 is a diagram of another structure of a communication apparatus according to an embodiment of this application.

DESCRIPTION OF EMBODIMENTS

The technical solutions provided in embodiments of this application may be applied to various wireless energy charging systems. The wireless energy charging system includes an energy providing device and a to-be-charged device. The energy providing device converts electric energy into an electromagnetic wave and transmits the electromagnetic wave in space. The to-be-charged device receives the electromagnetic wave, and converts the electromagnetic wave energy into electric energy, to finally implement wireless energy charging. "Wireless energy charging" may also be referred to as "energy charging", "energy transfer", or "charging". The term "energy charging" may also be described as "wireless energy transfer", "wireless charging", "wireless energy transmission", "radio frequency energy transmission", "radio frequency energy transfer", "radio frequency energy charging", or "radio frequency charging".

As an example, the wireless energy charging system includes a communication system related to the 3rd generation partnership project (3rd generation partnership project, 3GPP). For example, the wireless energy charging system may be a long term evolution (long term evolution, LTE) communication system, a 5th generation (sixth generation, 5G) mobile communication system, or another next generation mobile communication system, for example, a 6th generation (6G) communication system, or another similar communication system. The another similar communication system may include a wireless fidelity (wireless fidelity, Wi-Fi) system, a vehicle-to-everything (vehicle-to-everything, V2X) system, an internet of things (internet of things, IoT) system, a narrowband internet of things (narrowband internet of things, NB-IoT) system, and the like.

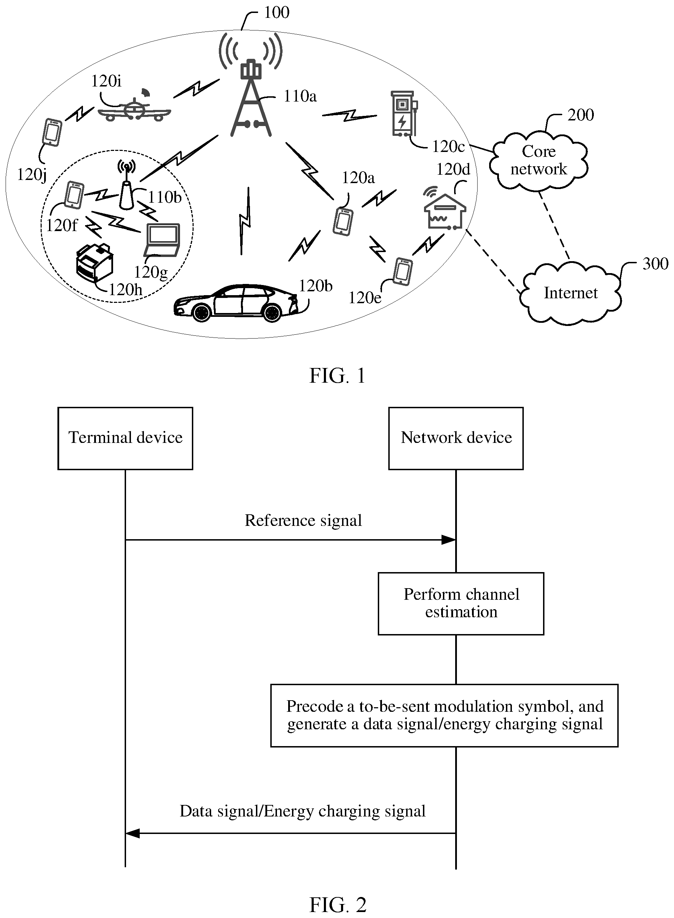

FIG. 1 shows a wireless energy charging system to which an embodiment of this application is applicable. The wireless energy charging system includes a radio access network 100 and a core network 200. Optionally, the wireless energy charging system may further include the internet 300.

The radio access network 100 may include at least one network device and at least one terminal device. For example, the radio access network 100 includes two network devices 110a and 110b and terminal devices such as 120a to 120j. The network architecture shown in FIG. 1 is merely an example, and there may be fewer or more terminal devices and/or network devices. The communication system described in embodiments of this application is intended to describe the technical solutions in embodiments of this application more clearly, but constitutes no limitation on the communication system to which embodiments of this application are applicable. For example, the communication system may further include another device, and the another device includes, for example, a wireless relay device and a wireless backhaul device, which are not shown in FIG. 1. A person of ordinary skill in the art may know that with evolution of the network architecture, the technical solutions provided in embodiments of this application are also applicable to a similar technical problem. When the technical solutions in embodiments of this application are applied to another communication system, the devices, components, modules, and the like in embodiments may be replaced with corresponding devices, components, and modules in the another communication system. This is not limited.

The at least one network device may be used as an energy providing device, and wirelessly charge energy to the at least one terminal device. Relatively, the at least one terminal device is a to-be-charged device. In embodiments of this application, a type of the energy providing device is not limited and a type of the to-be-charged device is not limited either. For example, the energy providing device may be a network device. Correspondingly, the to-be-charged device may be a terminal device, another network device, a relay device, or the like. For example, embodiments of this application are applied to the system shown in FIG. 1. The energy providing device may be the network device 110a, and the to-be-charged device may be the terminal device 120a; or the energy providing device may be the network device 110a, and the to-be-charged device may be the terminal device 110b. Alternatively, the energy providing device may be a relay network device, and the to-be-charged device may be a terminal device. For example, the energy providing device may be the network device 110b, and the to-be-charged device may be the terminal device 120f. The network device 110b may be considered as a relay device between the network device 110a and the terminal device 120f. In addition, in embodiments of this application, a quantity of energy providing device is not limited, and a quantity of to-be-charged devices is not limited either. The example in FIG. 1 is still used. The energy providing device may be the network device 110a, and the to-be-charged device may include the network device 110b, the terminal device 120f, the terminal device 120h, and the terminal device 120g.

The network device in embodiments of this application is mainly the access network device. Therefore, in the following descriptions, unless otherwise specified, the "network device" is a radio access network (radio access network, RAN) device, and may be referred to as the access network device for short. A RAN may be a cellular system related to the 3GPP, for example, the 5G mobile communication system, or a future-oriented evolved system (for example, the 6G mobile communication system). Alternatively, a RAN may be an open access network (open RAN, O-RAN, or ORAN), a cloud radio access network (cloud radio access network, CRAN), a virtualized radio access network (virtualized RAN, vRAN), or the like. Alternatively, a RAN may be a communication system that integrates two or more of the foregoing systems. The RAN device may also be referred to as a RAN node, a RAN entity, an access node, or the like.

In a possible scenario, the RAN node may be a base station (base station), an evolved NodeB (evolved NodeB, eNodeB), an access point (access point, AP), a transmission reception point (transmission reception point, TRP), a next generation NodeB (next generation NodeB, gNB), a next-generation base station in the 6G mobile communication system, a base station in a future mobile communication system, or the like. The RAN node may be a macro base station, a micro base station, an indoor base station, a relay node, a donor node/host node, a radio controller, or the like. The RAN node may alternatively be a server, a wearable device, a vehicle, a vehicle-mounted device, or the like. For example, a RAN node in a V2X technology may be a road side unit (road side unit, RSU).

In another possible scenario, the RAN node may be a module or unit that completes some functions of a base station; or a plurality of RAN nodes cooperate to assist the terminal device in implementing radio access, and different RAN nodes separately implement some functions of a base station. For example, the RAN node may be a central unit (central unit, CU), a distributed unit (distributed unit, DU), or a radio unit (radio unit, RU). A function of the CU may be implemented by one entity, or may be implemented by different entities. For example, the functions of the CU may further be divided. That is, a control plane and a user plane are separated, and are implemented by different entities, which are a control plane CU entity (namely, a CU-control plane (control plane, CP) entity) and a user plane CU entity (namely, a CU-user plane (user plane, UP) entity). The CU-CP entity and the CU-UP entity may be coupled to the DU, to jointly complete functions of the RAN node. The CU and the DU may be separately disposed, or may be included in a same network element, for example, a baseband unit (baseband unit, BBU).

In different systems, the CU (or the CU-CP and the CU-UP), the DU, or the RU may also have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The CU and the DU may be configured based on wireless network protocol layer functions implemented by the CU and the DU. For example, the CU is configured to implement functions of a packet data convergence protocol (packet data convergence protocol, PDCP) layer and a protocol layer (for example, a radio resource control (radio resource control, RRC) layer and/or a service data adaptation protocol (service data adaptation protocol, SDAP) layer) above the PDCP layer; and the DU is configured to implement functions of a protocol layer (for example, a radio link control (radio link control, RLC) layer, a MAC layer, and/or a physical (physical, PHY) layer) below the PDCP layer. For another example, the CU is configured to implement functions of a protocol layer (for example, an RRC layer and/or an SDAP layer) above a PDCP layer, and the DU is configured to implement functions of the PDCP layer and a protocol layer (for example, an RLC layer, a MAC layer, and/or a PHY layer) below the PDCP layer. For specific descriptions of the foregoing protocol layers, refer to a related technical specification of the 3GPP or a technical specification of another applicable communication protocol. Division into processing functions of the CU and the DU based on the protocol layers is merely an example. Division may alternatively be performed in another manner. This is not limited in this application. For example, in a design, the CU or the DU may alternatively have some processing functions of a protocol layer through division. In a design, some functions of the RLC layer and functions of a protocol layer higher than the RLC layer are set on the CU, and remaining functions of the RLC layer and functions of a protocol layer lower than the RLC layer are set on the DU.

In embodiments of this application, an apparatus configured to implement a function of the network device may be the network device, or may be an apparatus that can support the network device in implementing the function, for example, a chip system or a combined device or component that can implement the function of the network device. The apparatus may be installed in the network device. Neither a specific technology nor a specific device form used by the network device is limited in embodiments of this application.

In embodiments of this application, any device that can perform data communication with the base station may be considered as the terminal device. The terminal device is also referred to as a terminal, a terminal apparatus, user equipment (user equipment, UE), a mobile station, a mobile terminal, or the like. The terminal device may be widely used in various scenarios, for example, D2D communication, V2X communication, machine-type communication (machine-type communication, MTC), an IoT, virtual reality, augmented reality, industrial control, autonomous driving, telemedicine, a smart grid, smart furniture, smart office, smart wearables, smart transportation, or a smart city. For example, the terminal device may be a mobile phone, a computer, a mobile internet device (mobile internet device, MID), a wearable device, a virtual reality (virtual reality, VR) device, an augmented reality (augmented reality, AR) device, a station (station, STA), a robot arm, a camera, a robot, a smart home device (for example, a television, an air conditioner, a robotic vacuum cleaner, a sound box, or a set-top box), a relay (relay), or customer premises equipment (customer premises equipment, CPE).

If the various terminal devices described above are located in a vehicle (for example, placed/installed in the vehicle), the terminal devices may be all considered as vehicle-mounted terminal devices. The vehicle-mounted terminal device may be an in-vehicle module, an automobile module, an onboard component, an automotive chip, or an on board unit that is disposed in the vehicle as one or more components or units. The vehicle may implement the methods in this application by using the in-vehicle module, the automobile module, the onboard component, the automotive chip, or the on board unit that is disposed in the vehicle. The vehicle-mounted terminal device may be an entire vehicle device, an in-vehicle module, a vehicle, an on board unit (on board unit, OBU), a road side unit (road side unit, RSU), an in-vehicle infotainment system (also referred to as an in-vehicle sending unit) (telematics box, T-box), a chip, a system on a chip (system on a chip, SoC), or the like. The chip or the SoC may be installed in the vehicle, the OBU, the RSU, or the T-box.

In embodiments of this application, an apparatus configured to implement a function of the terminal device may be the terminal device, or may be an apparatus that can support the terminal device in implementing the function, for example, a chip system or a combined device or component that can implement the function of the terminal device. The apparatus may be installed in the terminal device. Neither a specific technology nor a specific device form used by the terminal device is limited in embodiments of this application.

For example, the energy providing device is a network device, and the to-be-charged device is a terminal device. In a wireless energy charging method, a data signal exchanged between the network device and the terminal device may be used as an energy charging signal. For example, FIG. 2 is a schematic flowchart of communication between the network device and the terminal device. In FIG. 2, the terminal device sends a reference signal to the network device, and the network device receives the reference signal, and performs channel estimation based on the reference signal, to obtain channel state information (channel state information, CSI). The network device generates a precoding matrix based on the CSI, precodes a to-be-sent modulation symbol, finally generates a data signal, and sends the data signal to the terminal device. The data signal may be used as an energy charging signal (this is used as an example in FIG. 2).

For example, the terminal device sends a modulation symbol s, and the modulation symbol s is received by the network device after frequency conversion and channel transmission. Considering channel fading and noise interference between the terminal device and the network device, the modulation symbol received by the network device $a=h\times s + z$, where $h$ is a channel fading value (also referred to as channel fading for short), and $z$ is noise. Before sending the energy charging signal, the network device needs to perform channel estimation to obtain $h$ and precode s. It may be understood that precoding is essentially channel conjugation. Therefore, the network device obtains $h$, and may obtain a modulation symbol $h^*\times s$ after precoding s, where *"h\*"* indicates a conjugate *of "h".* The network device may perform frequency conversion on the modulation symbol $h^*\times s$, to generate a data signal, and transmit the data signal to the air through an antenna, to implement wireless energy charging. The terminal device receives the data signal to obtain energy. It may be understood that receive power of the data signal is $|h|^2\times s$. That is, theoretically, maximum power that can be collected by the terminal device based on the received data signal is $|h|^2\times s$.

To obtain the energy charging signal in the manner shown in FIG. 2, precoding needs to be performed, and this is complex. Especially, when a plurality of terminal devices need to be charged, the network device needs to perform channel estimation on reference signals from the terminal devices, and perform precoding. This is more complex.

In view of this, the technical solutions in embodiments of this application are provided. The to-be-charged device needs to obtain energy only from the energy charging signal, and does not need to concern content included in the energy charging signal. Even if interference exists, wireless energy charging is not affected. Therefore, in embodiments of this application, the energy providing device may conjugate a modulation symbol from the to-be-charged device, and use a modulation symbol obtained by conjugation as a modulation symbol of the energy charging signal. Compared with wireless energy charging implemented by using the procedure shown in FIG. 2 (precoding needs to be performed), this embodiment of this application is simpler, and processing complexity is lower.

For ease of understanding of the solutions provided in embodiments of this application, a principle that good energy charging effect can be achieved by using a modulation symbol that is conjugated as a modulation symbol of an energy charging signal is first described.

The foregoing example is still used. To be specific, the terminal device sends a modulation symbol s, and the modulation symbol s is received by the network device after frequency conversion and channel transmission. A modulation symbol received by the network device is $a=h\times s + z$. In embodiments of this application, the network device conjugates the modulation symbol a, to obtain a\*, where a\* represents a conjugate of a. The network device performs frequency conversion on a* to generate an energy charging signal, and transmits the energy charging signal to the air through an antenna. It may be understood that receive power of the energy charging signal is a*×h = $|h|^2$×s* + z*×h, and the receive power is maximum power that can be collected by the terminal device from the energy charging signal. Compared with a maximum power $|h|^2$×s that can be collected by the terminal device in the procedure in FIG. 2, when a signal-to-noise ratio is high, that is, when a value of $\frac{|h×s|^2}{|z|^2}$ is large, a value of $|h|^2$×s* + z*×h approaches a value of $|h|^2$×s. In other words, when the signal-to-noise ratio is high, according to the method provided in embodiments of this application, power that can be collected by the terminal device approaches the maximum power that can be collected by the terminal device, that is, $|h|^2$×s. Therefore, according to the method provided in embodiments of this application, processing complexity can be reduced, and good energy charging effect can be achieved.

With reference to the foregoing content and the accompanying drawings, the following describes the technical solutions provided in embodiments of this application.

In embodiments of this application, "when", "as if", and "if" all mean that an apparatus performs corresponding processing in an objective case, are not intended to limit time, do not require the apparatus to necessarily have a determining action during implementation, and do not mean another limitation. Unless otherwise specified, "if" and "as if" are interchangeable, and "when" and "in a case of" are interchangeable. "When" and "if"/"as if" are interchangeable.

Unless otherwise specified, a quantity of nouns represents "a singular noun or a plural noun", namely, "one or more". "A plurality of" means two or more. In view of this, "a physical of" may alternatively be understood as "at least two" in embodiments of this application. "At least one" may be one or more, for example, at least one is one, two, or more. For example, including at least one means that one, two, or more are included, and which one or ones are included is not limited. For example, if at least one of A, B, and C is included, A, B, C, A and B, A and C, B and C, or A, B, and C may be included. Similarly, understandings of descriptions such as "at least one" are also similar. "At least one of the following" or a similar expression thereof indicates any combination of these items, including a single item or any combination of plural items. For example, "at least one of A, B, and C" includes A, B, C, AB, AC, BC, or ABC. The term "and/or" describes an association relationship for describing associated objects and represents that three relationships may exist. For example, A and/or B may represent the following three cases: Only A exists, both A and B exist, and only B exists. In addition, the character "/" generally indicates an "or" relationship between the associated objects.

Unless otherwise specified, ordinal numbers such as "first" and "second" in embodiments of this application are for distinguishing between a plurality of objects, but are not intended to limit a sequence, a time sequence, priorities, or importance of the plurality of objects. In addition, descriptions of "first" and "second" do not mean that objects are necessarily different. For example, a first modulation symbol sequence and a second modulation symbol sequence indicate that there are two modulation symbol sequences, and do not limit priorities, importance, or the like of the two modulation symbol sequences.

For one type of technical feature, technical features in the type of technical feature are distinguished by using "A", "B", "C", "D", and the like, and there is no chronological order or no size order between the technical features described by "A", "B", "C", and "D". For example, a manner A and a manner B in the following are merely intended to distinguish different conjugation manners, and do not limit a chronological order, a size order, a priority, an importance degree, or the like between the manner A and the manner B.

The wireless energy charging method provided in embodiments of this application may be performed by an energy providing device and a to-be-charged device. In embodiments of this application, types and a quantity of energy providing devices are not limited, and types and a quantity of to-be-charged devices are not limited either. For example, the energy providing device may be a network device, and the to-be-charged device may be a terminal device. The to-be-charged device may be one terminal device, or may be a plurality of terminal devices.

Embodiments of this application provide a plurality of wireless energy charging methods (for example, a wireless energy charging method 300, a wireless energy charging method 1000, and a wireless energy charging method 1100 in the following). For ease of description, in embodiments of this application, an example in which the energy providing device is a network device and the to-be-charged device is a terminal device is used. In the following descriptions, an example in which the wireless energy charging methods are separately performed by the network device and the terminal device is used. Steps performed by the network device may be implemented by a RAN device, or may be implemented by a component (for example, a module such as a baseband chip, another processing unit, or a processor) in the RAN device. For example, the network device may be the network device 110a in 1, or may be a chip (system) in the network device 110a in FIG. 1. Steps performed by the terminal device may be implemented by the terminal device, or may be implemented by a component (for example, a module such as a chip, a processing unit, or a processor) in the terminal device. The terminal device may be the terminal device 120a in FIG. 1, or may be a chip (system) in the terminal device 120a in FIG. 1.

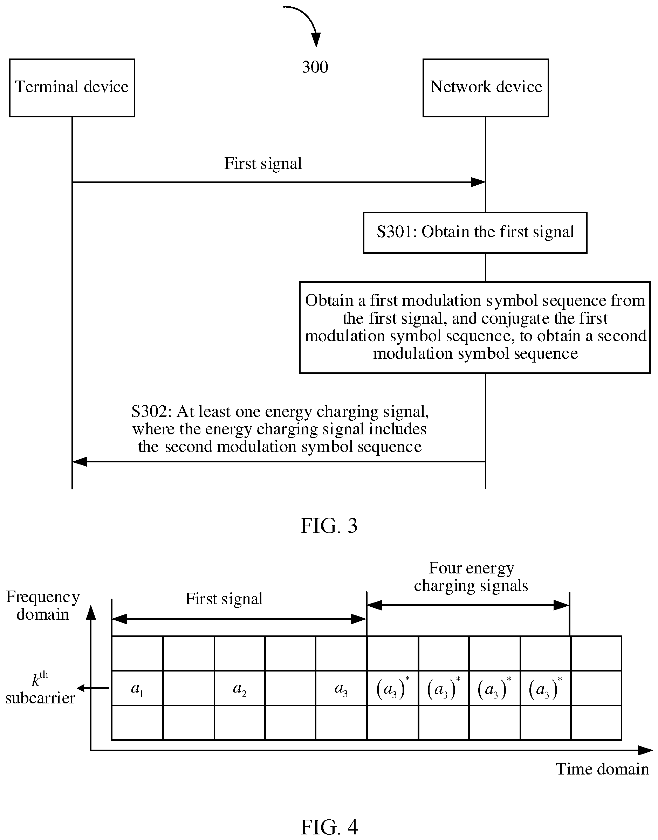

FIG. 3 is a schematic flowchart of a wireless energy charging method 300 according to an embodiment of this application. FIG. 3 describes the wireless energy charging method 300 from a perspective of interaction between a network device and a terminal device. The wireless energy charging method 300 may also be performed by another apparatus that may have a communication function. As shown in FIG. 3, a procedure of the wireless energy charging method 300 includes the following steps.

S301: The network device obtains a first signal, where the first signal includes a first modulation symbol sequence.

The first signal is from a to-be-charged device (for example, the terminal device), and is a signal used to request energy charging. The first signal is also referred to as an energy charging request signal or a signal that requests energy charging. This is not limited in this embodiment of this application. In addition, a type of the first signal is not limited in this embodiment of this application. For example, the first signal may reuse an existing signal. For example, the first signal may be a reference signal sent by the terminal device to the network device, and the reference signal is, for example, a sounding reference signal (sounding reference signal, SRS). For another example, the first signal may be a pilot signal sent by the terminal device to the network device. Alternatively, the first signal may be a signal dedicated to requesting energy charging.

If the first signal reuses an existing signal, for example, the first signal is the SRS or the pilot signal, when the network device cannot determine a purpose of the first signal, an incorrect behavior of the network device may be caused or the network device may not respond to the first signal. For example, the first signal is used to request energy charging, the network device considers the first signal as the pilot signal, and the network device does not respond to an energy charging request of the terminal device. To avoid the network device from incorrectly understanding the purpose of the first signal, this embodiment of this application provides the following two implementations.

**Implementation 1:** The terminal device indicates, to the network device by using signaling, that the first signal is used to request energy charging.

For example, the terminal device sends first indication information to the network device. The first indication information indicates that the first signal is used to request energy charging. Correspondingly, the network device receives the first indication information, and may determine, based on the first indication information, that the first signal is used to request energy charging.

The signaling that carries the first indication information is not limited in this embodiment of this application. For example, the first indication information may be carried in uplink control information (uplink control information, UCI), or the first indication information is the UCI. The first indication information may be sent to the network device together with the first signal. In other words, the terminal device sends the first signal and the first indication information to the network device by using one piece of signaling. Alternatively, the first signal may be separately sent to the network device, and the first indication information is also separately sent to the network device.

**Implementation 2:** It is indicated, based on a resource carrying the first signal, that the first signal is used to request energy charging.

In Implementation 2, a resource used to transmit an energy charging request signal may be (pre)configured. Correspondingly, the network device may determine, based on the resource carrying the first signal, whether the first signal is used to request energy charging.

For example, a first time-frequency resource is preconfigured as a resource used to transmit an energy charging request signal. The terminal device sends the first signal on the first time-frequency resource, and the network device receives the first signal on the first time-frequency resource, and determines that the first signal is used to request energy charging.

For another example, the network device may also dynamically configure, by using signaling, a resource used to transmit an energy charging request signal. The terminal device sends the first signal on the configured resource, and the network device receives the first signal on the configured resource, and determines that the first signal is used to request energy charging. For example, the network device sends configuration information to the terminal device. The configuration information indicates a second time-frequency resource, and the second time-frequency resource is used to transmit an energy charging request signal. The terminal device receives the configuration information, and when the terminal device needs to be charged, the terminal device may send the first signal on the second time-frequency resource. The network device receives the first signal on the second time-frequency resource, and determines that the first signal is used to request energy charging. Signaling that carries the configuration information is not limited in this embodiment of this application. For example, the configuration information may be carried on one or more of radio resource control (radio resource control, RRC) signaling, downlink control information (downlink control information, DCI), or a MAC control element (control element, CE). It should be noted that the second time-frequency resource and the first time-frequency resource may be a same resource, or may be different time-frequency resources.

In an implementation, the first time-frequency resource may be preconfigured, and the second time-frequency resource may be configured to coexist. In this case, the terminal device may send the first signal on the first time-frequency resource for the first time. Subsequently, the terminal device may send the first signal on the second time-frequency resource, to avoid the first time-frequency resource from being always occupied by one or more terminal devices, especially when a plurality of terminal devices share the first time-frequency resource. For example, after a passive terminal device implements energy charging by receiving an electromagnetic wave, the passive terminal device may send the first signal on the first time-frequency resource for the first time. After accessing a network, the terminal device may send the first signal on the second time-frequency resource. This can avoid congestion caused because the first time-frequency resource is always occupied by one or more terminal devices, to avoid a case in which some passive terminal devices cannot request energy charging because the first time-frequency resource cannot be used.

In an implementation, Implementation 1 is used by default, and Implementation 2 is not used or Implementation 2 does not exist. In this case, the network device does not need to send the configuration information. In other words, sending the configuration information by the network device is not a mandatory step, but an optional step. Alternatively, Implementation 2 is used by default, and Implementation 1 is not used or Implementation 1 does not exist. The terminal device does not need to send the first indication information. In other words, sending the first indication information by the terminal device is not a mandatory step, but an optional step.

In another implementation, Implementation 1 and Implementation 2 may coexist. For example, the terminal device sends the first signal on the first time-frequency resource or the second time-frequency resource, and the terminal device further sends the first indication information.

The following describes the first signal.

The first signal may include the first modulation symbol sequence. The first modulation symbol sequence may be one modulation symbol, or may be a sequence including a plurality of modulation symbols. The first signal/first modulation symbol sequence varies according to different energy charging scenarios. The following uses a specific energy charging scenario as an example for description.

**Scenario 1:** The to-be-charged device is one terminal device.

When the to-be-charged device is one terminal device, the first signal includes a modulation symbol sent by the terminal device. Correspondingly, the first modulation symbol sequence is a sequence including the modulation symbol sent by the terminal device to the network device. For example, the to-be-charged terminal device is a terminal device 1. A signal sent by the terminal device 1 to the network device includes a modulation symbol $a_1$, and the first modulation symbol sequence includes the modulation symbol $a = a_1$.

**Scenario 2:** The to-be-charged device is a plurality of terminal devices.

When the to-be-charged device is a plurality of terminal devices, the first signal includes modulation symbols sent by the plurality of terminal devices to the network device. Correspondingly, each modulation symbol in the first modulation symbol sequence is a superposition of modulation symbols from the plurality of terminal devices. For example, the plurality of terminal devices include a terminal device 1 and a terminal device 2. A signal sent by the terminal device 1 to the network device includes a modulation symbol $a_1$, and a signal sent by the terminal device 1 to the network device includes a modulation symbol $a_2$. In this case, the first modulation symbol sequence includes a modulation symbol $a = a_1 + a_2$. In Scenario 2, the plurality of terminal devices may send first signals to the network device by using a same time-frequency resource. Compared with a scenario in which the terminal devices use different time-frequency resources, resource overheads can be reduced.

When determining that the terminal device needs to be charged, the network device may obtain the first signal, and obtain the first modulation symbol sequence in the first signal. That the network device obtains the first signal includes: The network device receives the first signal. For example, when the terminal device needs to be charged, the terminal device may send the first signal to the network device, and correspondingly, the network device receives the first signal.

In an implementation, the network device receives the first signal, considers that the terminal device needs to be charged, and may obtain the first modulation symbol sequence in the first signal in a timely manner, to charge energy to the terminal device in a timely manner. This improves energy charging efficiency.

In another implementation, the network device receives the first signal, may store the first signal, and obtains the first signal when the network device needs to charge energy to the terminal device. For example, the network device may periodically obtain the first signal, generate an energy charging signal when obtaining the first signal each time, and send the energy charging signal to the terminal device. In this implementation, the terminal device can be charged for a plurality of times without sending the first signal for a plurality of times. This reduces impact on power consumption of the terminal device as much as possible. Certainly, the network device receives the first signal, may alternatively store the first modulation symbol sequence in the first signal, and obtains the first modulation symbol sequence when the network device needs to charge energy to the terminal device.

S302: The network device sends at least one energy charging signal, where the energy charging signal includes a second modulation symbol sequence, and the second modulation symbol sequence is obtained by conjugating at least one modulation symbol in the first modulation symbol sequence.

As described above, generating the energy charging signal based on a modulation symbol obtained by conjugation can also achieve good energy charging effect. Therefore, the network device may conjugate the at least one modulation symbol in the first modulation symbol sequence, to obtain the second modulation symbol sequence, and then generate the energy charging signal based on the second modulation symbol sequence.

A specific manner of conjugating the at least one modulation symbol in the first modulation symbol sequence is not limited in this embodiment of this application. The following describes several manners of conjugating on the at least one modulation symbol in the first modulation symbol sequence as examples, including but not limited to Manner A to Manner C in the following. $(a_i)^*$ in the following represents a conjugate of $a_i$.

**Manner** A: The at least one modulation symbol in the first modulation symbol sequence is conjugated, and a modulation symbol obtained by conjugation may be used as the second modulation symbol sequence.

The second modulation symbol sequence may be one modulation symbol, and the modulation symbol is a conjugate of one modulation symbol in the first modulation symbol sequence. For example, the first modulation symbol sequence is $[a_1, a_2, a_3]$, and the second modulation symbol sequence may be $(a_1)^*$, $(a_2)^*$, or $(a_3)^*$. In an implementation, the second modulation symbol sequence is a conjugate of the last modulation symbol in the first modulation symbol sequence. For example, the last modulation symbol in the first modulation symbol sequence is a second modulation symbol, the second modulation symbol sequence is a first modulation symbol, and the first modulation symbol is a conjugate of the second modulation symbol. The foregoing example is still used. That is, the first modulation symbol sequence is $[a_1, a_2, a_3]$. Assuming that $a_3$ is the last modulation symbol (that is, the second modulation symbol) in the first modulation symbol sequence, the first modulation symbol (that is, the second modulation symbol sequence) is $(a_3)^*$. Because a distance between $(a_3)^*$ and $a_3$ is shortest, a transmission channel of the second modulation symbol sequence is more correlated with a transmission channel of the second modulation symbol, and good energy charging effect can be achieved.

After obtaining the second modulation symbol sequence, the network device may generate an energy charging signal. The network device may send one energy charging signal, or may send a plurality of energy charging signals. This is not limited in this embodiment of this application.

For ease of understanding, FIG. 4 is a diagram of the first modulation symbol sequence and the second modulation symbol sequence. In FIG. 4, an example in which the first modulation symbol sequence is $[a_1, a_2, a_3]$ is used. The second modulation symbol sequence is a modulation symbol obtained by conjugating $a_3$. In FIG. 4, a symbol $a_3^*$ represents the second modulation symbol sequence, that is, one energy charging signal. In FIG. 4, an example in which the network device sends four energy charging signals is used.

In another implementation, the second modulation symbol sequence includes a plurality of modulation symbols, and the plurality of modulation symbols are respective conjugates of a plurality of modulation symbols in the first modulation symbol sequence. For example, the first modulation symbol sequence is $[a_1, a_2, a_3]$, and the second modulation symbol sequence may be a plurality of modulation symbols in $[(a_1)^*, (a_2)^*, (a_3)^*]$.

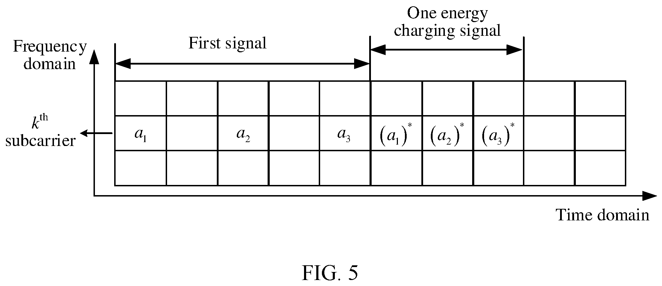

For example, FIG. 5 is a diagram of the first modulation symbol sequence and the second modulation symbol sequence. In FIG. 5, an example in which the first modulation symbol sequence is $[a_1, a_2, a_3]$ is used. The second modulation symbol sequence is modulation symbols obtained by respectively conjugating $a_1$, $a_2$, and $a_3$. In FIG. 5, $[a_1^*, a_2^*, a_3^*]$ is the second modulation symbol sequence, that is, one energy charging signal. In FIG. 5, an example in which the network device sends one energy charging signal is used.

In a process of generating the energy charging signal in Manner A, channel estimation and precoding do not need to be performed. Therefore, processing complexity of the network device can be reduced, and energy charging efficiency can be improved.

**Manner B:** Conjugation and amplitude scaling are performed on the at least one modulation symbol in the first modulation symbol sequence, and a modulation symbol obtained by performing conjugation and amplitude scaling on the at least one modulation symbol may be used as the second modulation symbol sequence.

In Manner B, conjugation on the at least one modulation symbol in the first modulation symbol sequence is performing conjugation and amplitude scaling on the at least one modulation symbol in the first modulation symbol sequence. For example, conjugation and amplitude scaling are performed on the second modulation symbol in the first modulation symbol sequence, to obtain the first modulation symbol in the second modulation symbol sequence. Assuming that an amplitude scaling factor is sk and the second modulation symbol is $a_1$, the network device conjugates $a_1$, to obtain a modulation symbol $(a_1)^*$, and then performs amplitude scaling on $(a_1)^*$ by using the amplitude scaling factor, to obtain $(a_1)^* \times sk$. $(a_1)^* \times sk$ is used as the first modulation symbol in the second modulation symbol sequence. Transmit power of the second modulation symbol sequence may be flexibly adjusted by amplitude scaling, so that power of the energy charging signal is higher, and the terminal device can collect higher power, to achieve better energy charging effect. The amplitude scaling factor used for conjugating the modulation symbol in the first modulation symbol sequence may vary in different time or different energy charging requirements, provided that power of the energy charging signal is increased.

In the foregoing example, the modulation symbol is first conjugated, and then amplitude scaling is performed. It should be noted that a processing sequence of conjugation and amplitude scaling is not limited in this embodiment of this application. For any modulation symbol in the first modulation symbol sequence, amplitude scaling may alternatively be performed first, and then conjugation is performed. The foregoing example is still used. For $a_1$, first, amplitude scaling is performed on $a_1$ by using an amplitude scaling factor, to obtain $(a_1 \times sk)$, and then $(a_1 \times sk)$ is conjugated, to obtain $(a_1 \times sk)^*$. $(a_1 \times sk)^*$ is used as a modulation symbol in the second modulation symbol sequence.

Similar to Manner A, in Manner B, the second modulation symbol sequence may also be one modulation symbol, and the modulation symbol is obtained by performing conjugation and amplitude scaling on one modulation symbol in the first modulation symbol sequence. For example, the first modulation symbol sequence is $[a_1, a_2, a_3]$, and the second modulation symbol sequence may be $(a_1)^* \times sk$, $(a_2)^* \times sk$, or $(a_3)^* \times sk$. In an implementation, a modulation symbol included in the second modulation symbol sequence is a conjugate of the last modulation symbol in the first modulation symbol sequence. The foregoing example is still used. That is, the first modulation symbol sequence is $[a_1, a_2, a_3]$, and the second modulation symbol sequence is $(a_3)^* \times sk$, to achieve good energy charging effect.

Alternatively, the second modulation symbol sequence is a plurality of modulation symbols, and the plurality of modulation symbols are obtained by respectively performing conjugation and amplitude scaling on a plurality of modulation symbols in the first modulation symbol. For example, the first modulation symbol sequence is $[a_1, a_2, a_3]$, and the second modulation symbol sequence is a plurality of modulation symbols in $[(a_1)^* \times sk, (a_2)^* \times sk, (a_3)^* \times sk]$. It may be understood that, when the second modulation symbol sequence is a plurality of modulation symbols, amplitude scaling factors of a plurality of modulation symbols that correspond to the plurality of modulation symbols and that are in the first modulation symbol sequence may be the same or may be different.

Similar to Manner A, in Manner B, channel estimation and precoding do not need to be performed either, so that processing complexity of the network device can be reduced, and energy charging efficiency can be improved. In addition, in Manner B, not only conjugation is performed on the modulation symbol in the first modulation symbol sequence, but also amplitude scaling is performed, so that the transmit power of the second modulation symbol sequence can be flexibly adjusted, to satisfy an actual energy charging requirement. For example, if the terminal device needs to collect higher power, a larger amplitude scaling factor may be selected, so that power of the energy charging signal is higher.

**Manner C:** The second modulation symbol sequence is obtained by performing conjugation and weighted averaging on at least two modulation symbols in the first modulation symbol sequence. The second modulation symbol sequence includes the first modulation symbol, and the first modulation symbol is obtained by performing conjugation and weighted averaging on at least two modulation symbols in the first modulation symbol sequence. "Weighted averaging" means multiplying each modulation symbol by a corresponding weight and then performing summation.

For example, assuming that the first modulation symbol sequence is $[a_1, a_2]$, the network device may conjugate $a_1$ and $a_2$ respectively to obtain $(a_1)^*$ and $(a_2)^*$, and then perform weighted averaging on $(a_1)^*$ and $(a_2)^*$. If a weight of $(a_1)^*$ is f1 and a weight of $(a_2)^*$ is f2, a weighted average of $(a_1)^*$ and $(a_2)^*$ is $(a_1)^* \times f1 + (a_2)^* \times f2$. The first modulation symbol in the second modulation symbol sequence is $(a_1)^* \times f1 + (a_2)^* \times f2$.

The foregoing uses an example in which the modulation symbols are first conjugated, and then weighted averaging is performed. It should be noted that a processing sequence of conjugation and weighted averaging is not limited in this embodiment of this application. For the at least two modulation symbols in the first modulation symbol sequence, weighted averaging may be performed first, and then conjugation is performed. The foregoing example is still used. The network device may separately perform weighted averaging on $a_1$ and $a_2$ to obtain $a_1 \times f1 + a_2 \times f2$, and then conjugate $a_1 \times f1 + a_2 \times f2$ to obtain $(a_1 \times f1 + a_2 \times f2)^* = (a_1 \times f1)^* + (a_2 \times f2)^*$. The first modulation symbol in the second modulation symbol sequence is $(a_1 xf1)^* + (a_2 \times f2)^*$.

In Manner C, the second modulation symbol sequence may be one modulation symbol. The modulation symbol is obtained by performing conjugation and weighted averaging on all modulation symbols in the first modulation symbol sequence. For example, the first modulation symbol sequence is $[a_1, a_2]$, and the second modulation symbol sequence may be $(a_1 \times f1)^* + (a_2 \times f2)^*$. Alternatively, the second modulation symbol sequence is one modulation symbol, and the modulation symbol is obtained by performing conjugation and weighted averaging on a part of the modulation symbols in the first modulation symbol sequence. For example, the first modulation symbol sequence is $[a_1, a_2, a_3]$, and the second modulation symbol sequence may be $(a_1 \times f1)^* + (a_2 \times f2)^*$.

Alternatively, the second modulation symbol sequence is a plurality of modulation symbols, and the plurality of modulation symbols are obtained by performing conjugation and weighted averaging on a plurality of groups of modulation symbols in the first modulation symbol sequence. Each group of modulation symbols includes at least one modulation symbol. For example, the first modulation symbol sequence is $[a_1, a_2, a_3, a_4, a_5]$, and weighted values corresponding to the five modulation symbols are successively f1, f2, f3, f4, and f5. $a_1$ and $a_2$ are considered as a group of modulation symbols, and $a_4$ are $a_5$ are considered as a group of modulation symbols, and the second modulation symbol sequence may be $(a_5 \times f5)^* + (a_4 \times f4)^*$ and $(a_1 \times f1)^* + (a_2 \times f2)^*$. It should be noted that the foregoing is merely an example. A quantity of modulation symbols included in a group of modulation symbols is not limited in this embodiment of this application. Different groups of modulation symbols may include different quantities of modulation symbols.

Similar to Manner A, in Manner C, channel estimation and precoding do not need to be performed either, so that processing complexity of the network device can be reduced, and energy charging efficiency can be improved. In addition, in Manner C, weighted averaging is performed on the at least two modulation symbols in the first modulation symbol sequence, so that noise can be reduced, and a signal-to-noise ratio of the second modulation symbol sequence is higher. Correspondingly, power of the energy charging signal generated based on the second modulation symbol sequence is higher, so that energy charging effect is better.

It may be understood that, due to directivity of a beam, an energy charging signal obtained in the procedure in FIG. 2 (that is, the precoding solution) can implement energy focusing only in a space dimension. Therefore, in this embodiment of this application, a large quantity of modulation symbols in the first modulation symbol sequence may be conjugated, to make full use of channel information in a period of time as much as possible, implement energy focusing in a time dimension, reduce a loss of energy charging effect, and achieve good energy charging effect. When the second modulation symbol sequence is obtained by conjugating the at least two modulation symbols in the first modulation symbol sequence, sequence reversal may further be performed on a symbol sequence obtained by conjugating the at least two modulation symbols in the first modulation symbol sequence. A modulation symbol sequence obtained by sequence reversal is used as the second modulation symbol sequence. That is, the second modulation symbol sequence is obtained by conjugating the at least two modulation symbols in the first modulation symbol sequence and then performing sequence reversal. Through sequence reversal, channel information in a period of time can be fully used, so that the second modulation symbol sequence implements energy focusing in a time dimension, and energy charging effect is better than that in the procedure in FIG. 2.

For example, the first modulation symbol sequence is $[a_1, a_2, a_3]$, and $a_1, a_2$, and $a_3$ are conjugated. According to Manner A, $a_1, a_2$, and $a_3$ are conjugated, to respectively obtain symbol sequences $(a_1)^*, (a_2)^*$, and $(a_3)^*$; and then sequence reversal is performed, to obtain the second modulation symbol sequence $[(a_3)^*, (a_2)^*, (a_1)^*]$. According to Manner B, $a_1, a_2$ and $a_3$ are conjugated, to respectively obtain the symbol sequences $(a_1)^*, (a_2)^*$, and $(a_3)^*$; amplitude scaling is performed, to obtain a symbol sequence $[(a_1)^* \times sk, (a_2)^* \times sk, (a_3)^* \times sk]$; and then sequence reversal is performed, to obtain the second modulation symbol sequence $[(a_3)^* \times sk, (a_2)^* \times sk, (a_1)^* \times sk]$. According to Manner C, conjugation and weighted averaging are separately performed on $a_1, a_2$, and $a_3$, to obtain the second modulation symbol sequence $(a_1 \times f1)^* + (a_2 \times f2)^* + (a_3 \times f3)^*$, where f1, f2, and f3 are weights in one-to-one correspondence with $a_1, a_2$, and $a_3$.

Through sequence reversal, the second modulation symbol sequence can implement energy focusing in a time dimension, to improve energy charging effect. For ease of understanding, the following describes a principle in which sequence reversal can improve energy charging effect.

It is assumed that the terminal device sends a symbol sequence s(n), and $s(n)$ is received by the network device after up-conversion and channel transmission. The network device performs down-conversion on the received signal, to obtain a symbol sequence $a(n) = h(n) * s(n) + z(n)$. $h(n)$ is channel fading, $z(n)$ is receive noise, and $*$ represents convolution. According to matched filtering, when the energy charging signal is $h^*(-n) * s(n)$, power that can be collected by the terminal device from the energy charging signal is highest. That is, when n=0, a pulse of the energy charging signal is highest. In this embodiment of this application, $a(n)$ is conjugated, to obtain $a^*(n)$, and then sequence reversal is performed on $a^*(n)$, to obtain a symbol sequence $a^*(-n) = h(-n)^* * s^*(-n) + z^*(-n)$. Because information does not need to be carried during energy charging, $s(n)$ may be a constant s, and $a^*(-n) = h(-n)^* \cdot s + +z^*(-n)$. It can be learned from comparison between $a^*(-n)$ and $a(n)$ that $a^*(-n)$ additionally includes a noise term in comparison with $a(n)$. Therefore, although the modulation symbols are conjugated and then sequence reversal is performed, good energy charging effect can still be achieved.

In an implementation, the first modulation symbol sequence is a modulation symbol sequence obtained by performing channel estimation on the first signal. In other words, after obtaining the first signal, the network device may obtain the first modulation symbol sequence from the first signal based on a channel estimation result. Each modulation symbol in the first modulation symbol sequence is a channel fading value. For example, before channel estimation, the first modulation symbol sequence is $[a_1, a_2, a_3]$. After channel estimation, the first modulation symbol sequence is [h1, h2, h3...], where h1 is a channel fading value of $a_1$, h2 is a channel fading value of $a_2$, and h3 is a channel fading value of $a_3$. By performing channel estimation on the first signal, impact of interference and noise on the first modulation symbol sequence can be reduced, so that noise of the second modulation symbol sequence obtained based on the first modulation symbol sequence is also low. Therefore, power of the energy charging signal generated based on the second modulation symbol sequence is high, and energy charging effect is better.

After obtaining the second modulation symbol sequence, the network device generates the energy charging signal based on the second modulation symbol sequence, and sends the energy charging signal. The network device may send one energy charging signal, or may send a plurality of energy charging signals. In an implementation, an antenna used to send the energy charging signal is the same as an antenna used to receive the first signal, or an antenna used to send the second modulation symbol sequence is the same as an antenna used to receive the first modulation symbol sequence. For example, a first modulation symbol in the first modulation symbol sequence is received through a $p^{th}$ antenna, and the second modulation symbol in the second modulation symbol sequence is sent through the $p^{th}$ antenna. Alternatively, for a symbol $a_p$ obtained through the $p^{th}$ antenna, after frequency conversion is performed on the modulation symbol (for example, $a_i^*$) obtained by conjugating $a_p$, a symbol is still sent through the $p^{th}$ antenna. $p$ is an integer greater than or equal to 0. That is, antennas may be numbered from 0. According to this solution, a phase offset between a transmit antenna and a receive antenna may be as small as possible, and the transmission channel of the second modulation symbol sequence and the transmission channel of the first modulation symbol sequence are highly correlated, so that power of the energy charging signal is as high as possible, to achieve good energy charging effect.

In addition, energy charging effect varies depending on different time-frequency resources occupied by the energy charging signal. A time-frequency resource occupied by the energy charging signal also varies depending on different time-frequency resources occupied by the first signal. The different time-frequency resources include different time domain resources and/or different frequency domain resources. The following separately describes the frequency domain resource and the time domain resource.

(1) Frequency domain resource:

**Case 1:** The first modulation symbol sequence occupies one subcarrier.

In this case, a subcarrier occupied by the second modulation symbol sequence and the subcarrier occupied by the first modulation symbol sequence are spaced by m subcarriers, where m is an integer, for example, m is 0, 1, or another possible value. For example, the first modulation symbol sequence includes a modulation symbol $a_k^j$ obtained from the $k^{th}$ subcarrier, and correspondingly, the second modulation symbol sequence includes a modulation symbol $\left(a_k^j\right)^*$, and $\left(a_k^j\right)^*$ may be mapped to the $k+m^{th}$ subcarrier of the $j$ $+n^{th}$ symbol, that is, $a_{k+m}^{j+n} = \left(a_k^j\right)^*$, where n is a positive integer.

m may be (pre)configured or predefined. For example, the network device may send sixth indication information to the terminal device. The sixth indication information indicates m. This embodiment of this application imposes no limitation on a type of signaling that carries m. For example, the sixth indication information may be carried in one or more of RRC signaling, DCI signaling, or a MAC CE. It should be noted that sending the sixth indication information by the network device to the terminal device is not a mandatory step.

In an implementation, m=0, that is, the subcarrier occupied by the second modulation symbol sequence is the subcarrier occupied by the first modulation symbol sequence, to obtain good energy charging effect. It may be understood that channels have correlation in frequency domain, and similar channels have high correlation and low noise. Therefore, when the subcarrier occupied by the second modulation symbol sequence is the same as the subcarrier occupied by the first modulation symbol sequence, noise of the energy charging signal can be low, to achieve good energy charging effect.

For example, still refer to FIG. 4. In FIG. 4, the first modulation symbol sequence is $[a_1, a_2, a_3]$, and the second modulation symbol sequence is a modulation symbol obtained by conjugating the symbol $a_3$. In FIG. 4, $(a_3)^*$ represents the second modulation symbol sequence, that is, one energy charging signal. In FIG. 4, an example in which the network device sends four energy charging signals is used. As shown in FIG. 4, a subcarrier occupied by the second modulation symbol sequence is a subcarrier occupied by the first modulation symbol sequence.

For another example, still refer to FIG. 5. In FIG. 5, the first modulation symbol sequence is $[a_1, a_2, a_3]$, and the second modulation symbol sequence is modulation symbols obtained by performing conjugation and sequence reversal on symbols $a_1$, $a_2$ and $a_3$. In FIG. 5, the second modulation symbol sequence is $[(a_3)^*, (a_2)^*, (a_1)^*]$. In FIG. 5, an example in which the network device sends two energy charging signals is used. As shown in FIG. 5, a subcarrier occupied by the second modulation symbol sequence is a subcarrier occupied by the first modulation symbol sequence.

It should be noted that, if the subcarrier occupied by the first modulation symbol sequence is used, the second modulation symbol sequence may be sent in a position closest to the subcarrier occupied by the first modulation symbol sequence, to ensure good energy charging effect as much as possible. A remaining subcarrier other than the subcarrier used to carry the second modulation symbol sequence may be used to carry data, or may be a null carrier that does not carry information.

**Case 2:** The first modulation symbol sequence occupies a plurality of subcarriers.

In this case, the second modulation symbol sequence may occupy at least one of the plurality of subcarriers occupied by the first modulation symbol sequence, to increase charging power as much as possible or reserve more available resources for service data.

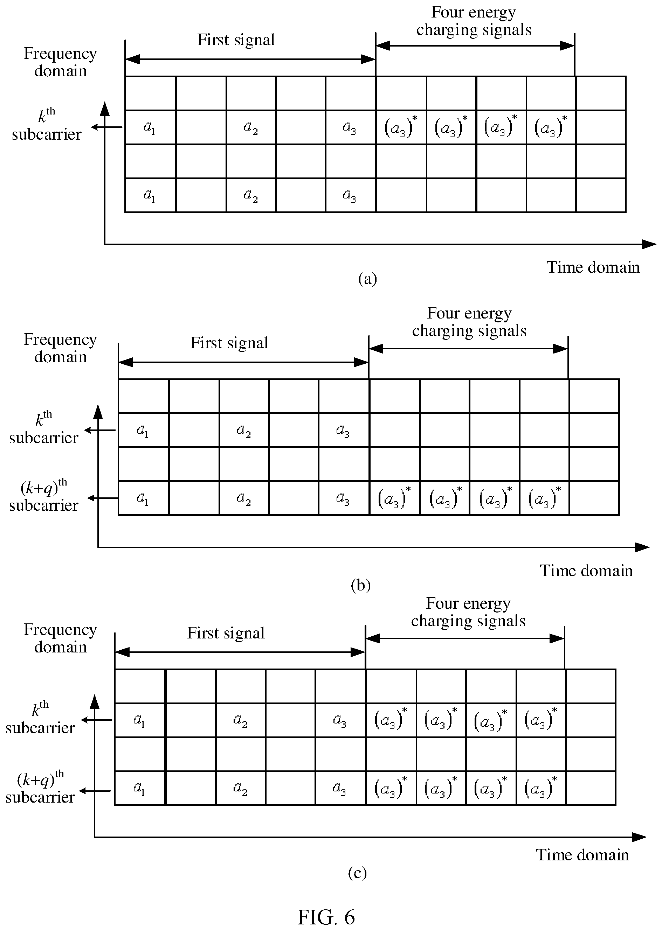

For example, FIG. 6 is a first diagram of time-frequency resources occupied by the first modulation symbol sequence and the second modulation symbol sequence. FIG. 6 uses an example in which the first modulation symbol sequence includes modulation sym-

bols [$a_1$, $a_2$, $a_3$] obtained from the $k$th subcarrier and modulation symbols [$a_1$, $a_2$, $a_3$] obtained from the $(k+q)$th subcarrier. The second modulation symbol sequence is a modulation symbol obtained by conjugating $a_3$. In FIG. 6, $(a_3)^*$ represents the second modulation symbol sequence, that is, one energy charging signal. In FIG. 6, an example in which the network device sends four energy charging signals is used.

As shown in (a) in FIG. 6, the second modulation symbol sequence may occupy the $k$th subcarrier, to reserve more available resources for service data transmission, and reduce resource conflicts. As shown in (b) in FIG. 6, the second modulation symbol sequence may occupy the $(k+q)$th subcarrier, to reserve more available resources for service data transmission, and reduce resource conflicts. As shown in (c) in FIG. 6, the second modulation symbol sequence may occupy the $k$th subcarrier and the $(k+q)$th subcarrier, to increase charging power.

In an implementation, the subcarrier occupied by the second modulation symbol sequence and a subcarrier (for example, a lowest subcarrier or a highest subcarrier) in the plurality of subcarriers occupied by the first modulation symbol sequence are spaced by at least one subcarrier.

(2) Time domain resource: A time domain start position of the second modulation symbol sequence and a time domain end position of the first modulation symbol sequence are spaced by n symbols, and n is an integer greater than or equal to 0.

For example, the first modulation symbol sequence includes a modulation symbol a $a_k^j$ obtained from the $k$th subcarrier, and correspondingly, the second modulation symbol sequence includes a modulation symbol $\left(a_k^j\right)^*$, and $\left(a_k^j\right)^*$ may be mapped to the $k$th subcarrier of the $j + \Delta$th symbol, that is, $\left(a_k^j\right)^* = a_k^{j+\Delta}$, where $\Delta$ is a positive integer. For another example, the first modulation symbol sequence includes modulation symbols $[a_k^j, a_k^{j+1}, a_k^{j+2}]$ obtained from the $k$th subcarrier, the second modulation symbol sequence is $\left[\left(a_k^{j+2}\right)^*, \left(a_k^{j+1}\right)^*, \left(a_k^j\right)^*\right]$, and $\left[\left(a_k^{j+2}\right)^*, \left(a_k^{j+1}\right)^*, \left(a_k^j\right)^*\right]$ are sequentially mapped to the $k$th subcarriers of the $(j + \Delta)$th, $(j + \Delta + 1)$th, and $(j + \Delta + 2)$th symbols.

n may be (pre)configured or predefined. For example, the network device may send fifth indication information to the terminal device. The fifth indication information indicates n. This embodiment of this application imposes no limitation on a type of signaling that carries n. For example, the fifth indication information may be carried in one or more of RRC signaling, DCI signaling, or a MAC CE. It should be noted that sending the fifth indication information by the network device to the terminal device is not a mandatory step.

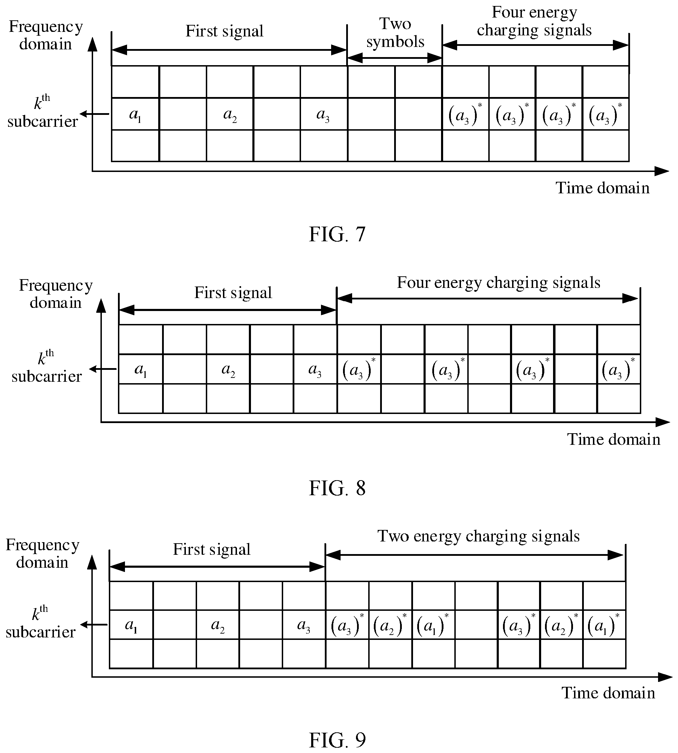

In an implementation, n=0. That is, the time domain start position of the second modulation symbol sequence is the end time domain position of the first modulation symbol sequence. In this way, the energy charging signal can be sent more quickly, to improve energy charging efficiency, as shown in FIG. 4 or FIG. 5. In an implementation, n is greater than 0, for example, $\Delta$=2, as shown in FIG. 7. A difference between FIG. 7 and FIG. 4 lies in that, FIG. 7 uses an example in which the second modulation symbol sequence and the first modulation symbol sequence are spaced by two symbols in time domain. For other descriptions, refer to the descriptions in FIG. 4.

FIG. 4 and FIG. 5 use an example in which the second modulation symbol sequence is consecutive in time domain. In an implementation, the second modulation symbol sequence is discrete in time domain. For example, FIG. 8 is a third diagram of time-frequency resources occupied by the first modulation symbol sequence and the second modulation symbol sequence. A difference between FIG. 8 and FIG. 4 lies in that, FIG. 8 uses an example in which the second modulation symbol sequence is discrete in time domain. For other descriptions, refer to the descriptions in FIG. 4. A remaining symbol other than a symbol used to carry the second modulation symbol sequence may be used to carry data. When the second modulation symbol sequence is discrete in time domain, service data may be transmitted as early as possible, to reduce a transmission latency of the service data. Similarly, FIG. 9 is a fourth diagram of time-frequency resources occupied by the first modulation symbol sequence and the second modulation symbol sequence. FIG. 9 uses an example in which the first modulation symbol sequence is [$a_1$, $a_2$, $a_3$] and the second modulation symbol sequence is [$(a_3)^*$, $(a_2)^*$, $(a_1)^*$]. A difference between FIG. 9 and FIG. 5 lies in that, FIG. 9 uses an example in which the second modulation symbol sequence is discrete in time domain. For other descriptions, refer to the descriptions in FIG. 5.

As described above, in the wireless energy charging method 300 provided in this embodiment of this application, a modulation symbol from the to-be-charged device is conjugated, and an energy charging signal is generated based on a modulation symbol obtained by conjugation. Compared with a conventional process in which precoding needs to be performed in a process in which a capability providing device generates an energy charging signal, this method has low complexity, and is applicable to a terminal device with a low processing capability. In addition, compared with an energy charging signal obtained by precoding, in this embodiment of this application, capability focusing may be further performed in a time dimension, to further improve energy charging effect.

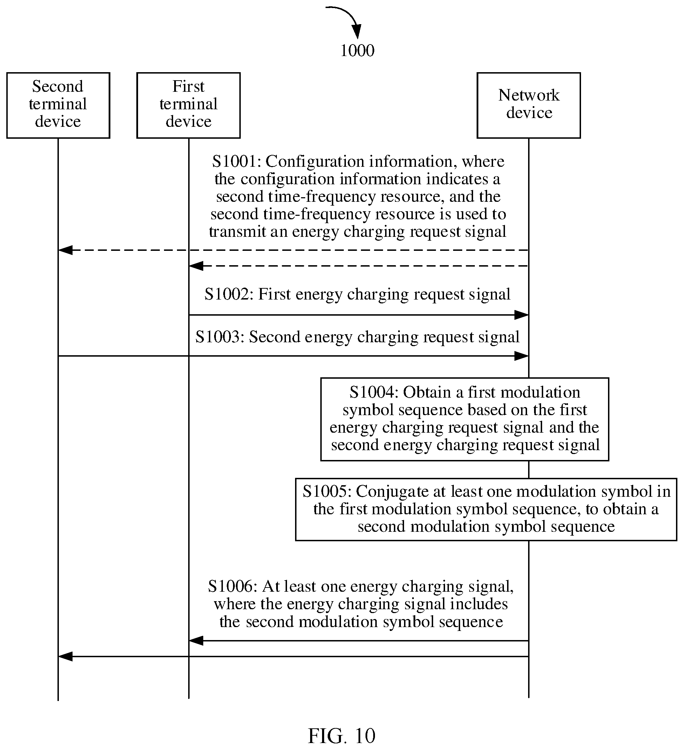

The wireless energy charging method 300 provided in this embodiment of this application is applicable to energy charging of one terminal device. An embodiment of this application further provides a wireless energy charging method 1000. The wireless energy charging method 1000 may be applicable to energy charging of a plurality of terminal devices. The following uses a procedure in FIG. 10 as an example to describe energy charging of a plurality of terminal devices to which the wireless energy charging method 1000 is applied. In FIG. 10, the plurality of terminal devices include a first terminal device and a second terminal device. A procedure of the wireless energy charging method 1000 provided in FIG. 10 includes the following steps.

S1001: A network device broadcasts or multicasts configuration information, where the configuration information indicates a second time-frequency resource, and the second time-frequency resource is used to transmit an energy charging request signal.

The first terminal device receives the configuration information, and when the first terminal device needs to be charged, the first terminal device sends a first signal on the second time-frequency resource. The second terminal device receives the configuration information, and when the second terminal device needs to be charged, the second terminal device sends a first signal on the second time-frequency resource. As described in the foregoing wireless energy charging method 300, the second time-frequency resource may be preconfigured or predefined. Therefore, S1001 is not a mandatory step, and is shown by a dashed line in FIG. 10.

S1002: The first terminal device sends a first energy charging request signal to the network device on the second time-frequency resource.

S1003: The second terminal device sends a second energy charging request signal to the network device on the second time-frequency resource.

The first energy charging request signal is used to request energy charging, and the second energy charging request signal is used to request energy charging. The first energy charging request signal and the second energy charging request signal are similar to the foregoing first signal. For details, refer to related content of the first signal. Details are not described herein again.

S1004: The network device obtains a first modulation symbol sequence based on the first energy charging request signal and the second energy charging request signal.

The network device receives the first energy charging request signal and the second energy charging request signal on the second time-frequency resource, or the network device receives a superposition of the first energy charging request signal and the second energy charging request signal on the second time-frequency resource. The network device obtains modulation symbols on subcarriers from a superposed signal of the first energy charging request signal and the second energy charging request signal, that is, obtains the first modulation symbol sequence.

S1005: The network device conjugates at least one modulation symbol in the first modulation symbol sequence, to obtain a second modulation symbol sequence.

The network device obtains the first modulation symbol sequence, and conjugates the at least one modulation symbol in the first modulation symbol sequence, to obtain the second modulation symbol sequence. For details, refer to related content in S302. Details are not described herein again.

S1006: The network device broadcasts or multicasts at least one energy charging signal.

The network device obtains the second modulation symbol sequence, performs processing such as frequency conversion, generates the energy charging signal, and sends the at least one energy charging signal. For details of S1006, refer to related content in S302. Details are not described herein again. The first terminal device receives the at least one energy charging signal, to implement energy charging. The second terminal device receives the at least one energy charging signal, to implement energy charging.

In the wireless energy charging method 300 and the wireless energy charging method 1000, an example in which the terminal device sends the first signal/energy charging request signal to the network device when the terminal device needs to be charged is used. In a possible scenario, remaining energy of the terminal device is very low, and the terminal device is even incapable of sending the energy charging request signal, and cannot actively request energy charging from the network device. Therefore, an embodiment of this application further provides a wireless energy charging method 1100. In the wireless energy charging method 1100, a terminal device indicates, to a network device by reflecting a signal from the network device, that the terminal device needs to be charged, and the terminal device does not need to actively send an energy charging request signal, to avoid energy consumption caused by actively sending the energy charging request signal by the terminal device.

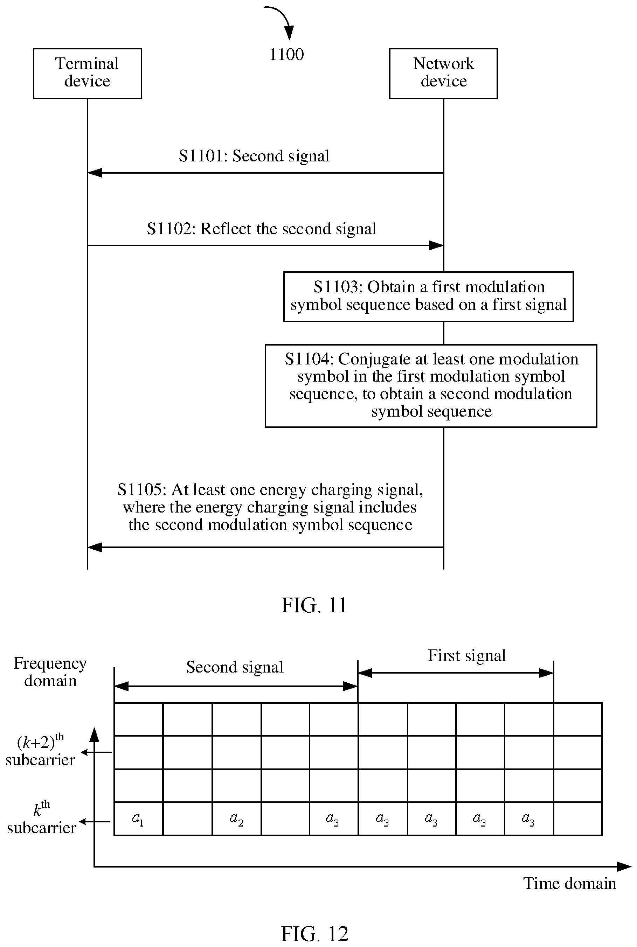

FIG. 11 is a schematic flowchart of a wireless energy charging method 1100 according to an embodiment of this application. In the wireless energy charging method 1100, an example in which an energy providing device is a network device and a to-be-charged device is a terminal device is used. The wireless energy charging method 1100 may be applicable to energy charging of one or more terminal devices. A procedure of the wireless energy charging method 1100 provided in FIG. 11 includes the following steps.

S1101: The network device sends a second signal.

The second signal may be any signal sent by the network device. This is not limited in this embodiment of this application.

S1102: The terminal device reflects the second signal.

When the terminal device needs to be charged, the terminal device may reflect the second signal from the network device. The network device receives a reflected signal of the second signal, and considers that the terminal device needs to be charged. A function of the reflected signal of the second signal is similar to that of the foregoing first signal, and the reflected signal is used to request energy charging. The first signal may alternatively be the reflected signal of the second signal. For ease of description, in this embodiment of this application, the reflected signal of the second signal is referred to as the first signal.

In an implementation, the terminal device may reflect all modulation symbols included in the second signal, or may reflect a part of the modulation symbols included in the second signal. For example, the second signal includes modulation symbols $[a_1, a_2, a_3]$, and the first signal includes at least one modulation symbol $a_3$. For another example, the second signal includes modulation symbols $[a_1, a_2, a_3]$, and the first signal includes $[a_1, a_2, a_3]$. $a_1$, $a_2$, and $a_3$ may be the same or may be different.

In this embodiment of this application, a frequency domain resource to which the reflected signal (namely, the first signal) of the second signal is mapped is not limited. The frequency domain resource to which the first signal is mapped varies according to different energy charging scenarios. The following uses a specific energy charging scenario as an example for description.

**Scenario 1:** The to-be-charged device is one terminal device.

When the second signal occupies one subcarrier, a subcarrier occupied by the first signal and the subcarrier occupied by the second signal are spaced by $k$ subcarriers, where $k$ is an integer. $k$ may be (pre) configured. For example, the network device sends second indication information to the terminal device. The second indication information indicates $k$. Specific signaling that carries the second indication information is not limited in this embodiment of this application. For example, the second indication information may be carried in one or more of RRC signaling, DCI signaling, or a MAC CE.

In an implementation, $k=0$. For example, FIG. 12 shows frequency domain positions of the first signal and the second signal. In FIG. 12, modulation symbols included in the second signal are $[a_1, a_2, a_3]$, and modulation symbols included in the first signal are $[a_3, a_3, a_3, a_3]$. It can be learned from FIG. 12 that a subcarrier occupied by the first signal is the same as a subcarrier occupied by the second signal.

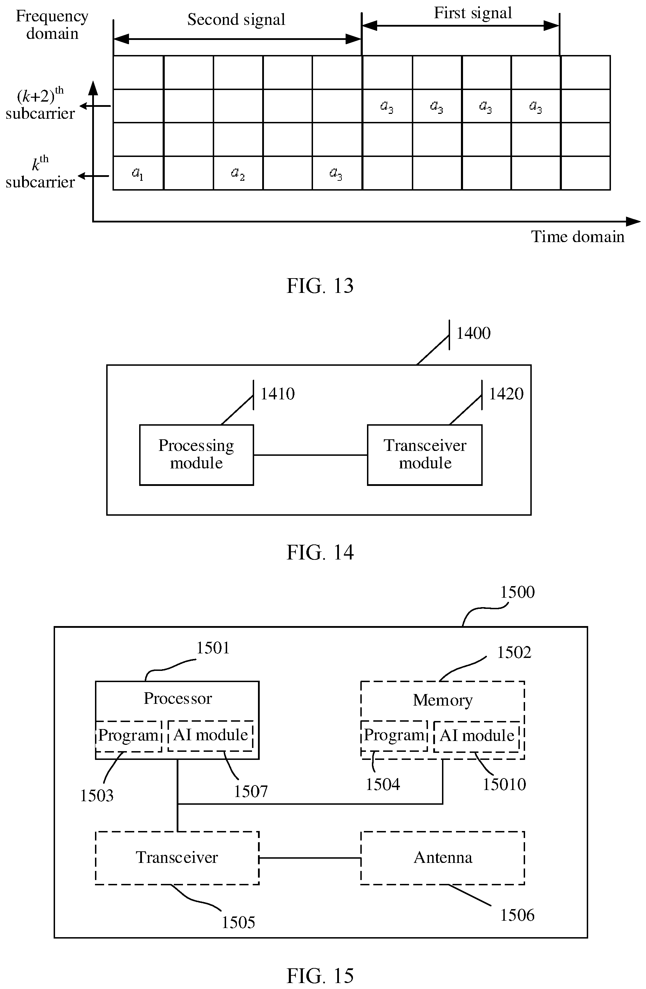

In an implementation, $k \neq 0$. For example, FIG. 13 shows frequency domain positions of the first signal and the second signal. In FIG. 13, modulation symbols included in the second signal are $[a_1, a_2, a_3]$, and modulation symbols included in the first signal are $[a_3, a_3, a_3, a_3]$. It can be learned from FIG. 13 that a subcarrier occupied by the first signal and a subcarrier occupied by the second signal are spaced by two subcarriers.

**Scenario 2:** The to-be-charged device is a plurality of terminal devices.

When the to-be-charged device is a plurality of terminal devices, different terminal devices may reflect the second signal to different frequency domain positions. For example, the first signal is from a first terminal device and a second terminal device. The first signal may include a first component and a second component, the first component corresponds to the first terminal device, and the second component corresponds to the second terminal device. A subcarrier occupied by the first component and the subcarrier occupied by the second signal are spaced by $k1$ subcarriers, a subcarrier occupied by the second component and the subcarrier occupied by the second signal are spaced by $k2$ subcarriers, $k1$ and $k2$ are different, and $k1$ and $k2$ are both integers.

$k1$ and $k2$ may be (pre)configured. For example, the network device sends third indication information to the terminal device. The third indication information indicates $k1$. The network device sends fourth indication information to the terminal device. The fourth indication information indicates $k2$. Specific signaling that carries the third indication information and the fourth indication information is not limited in this embodiment of this application. For example, the third indication information and the fourth indication information may be carried in one or more of RRC signaling, DCI signaling, or a MAC CE.

S1103: The network device obtains a first modulation symbol sequence based on the first signal.

For details, refer to related content in S301. Details are not described herein again.

S1104: The network device conjugates at least one modulation symbol in the first modulation symbol sequence, to obtain a second modulation symbol sequence.

The network device obtains the first modulation symbol sequence, and conjugates the at least one modulation symbol in the first modulation symbol sequence, to obtain the second modulation symbol sequence. For details, refer to related content in S302. Details are not described herein again.

S1105: The network device sends at least one energy charging signal.

The network device obtains the second modulation symbol sequence, performs processing such as frequency conversion, generates an energy charging signal, and sends the at least one energy charging signal. For details of S1104, refer to related content in S302. Details are not described herein again.

Embodiments provided in embodiments of this application may be separately performed, or may be combined with each other. For example, the wireless energy charging method 300 and the wireless energy charging method 1000 may be combined with each other. The wireless energy charging method 300 and the wireless energy charging method 1100 may also be combined with each other.

In the foregoing embodiments provided in this application, the method provided in embodiments of this application is described from a perspective of interaction between the terminal device and the network device. The steps performed by the terminal device may be implemented by different functional entities included in the terminal device. The steps performed by the network device may be implemented by different functional entities included in the network device. For example, the network device may be in a CU-DU architecture, the CU may generate an energy charging signal, and the DU may send the energy charging signal. To implement functions in the method provided in the foregoing embodiments of this application, the terminal device and the network device may include a hardware structure and/or a software module, and the foregoing functions are implemented in a form of the hardware structure, the software module, or a combination of the hardware structure and the software module. Whether a function in the foregoing functions is performed by using the hardware structure, the software module, or the combination of the hardware structure and the software module depends on particular applications and design constraint conditions of the technical solutions.

The following describes, with reference to the accompanying drawings, communication apparatuses for implementing the foregoing methods in embodiments of this application. Therefore, all the foregoing content may be used in the following embodiments. Repeated content is not described again.

FIG. 14 is a block diagram of a communication apparatus 1400 according to an embodiment of this application. The communication apparatus 1400 may be the network device or the terminal device in the foregoing embodiments. For example, the communication apparatus 1400 may be the network device or the terminal device in FIG. 1. Alternatively, the communication apparatus 1400 is a chip (system) in the network device or a chip (system) in the terminal device. Alternatively, the communication apparatus 1400 is a software module in the network device or the terminal device. The communication apparatus 1400 may correspondingly implement functions or steps implemented by the terminal device or the network device in the foregoing method embodiments. The communication apparatus 1400 may include a processing module 1410 and a transceiver module 1420. Optionally, a storage module may further be included. The storage module may be configured to store instructions (code or a program) and/or data. The storage module may be, for example, a memory. The processing module 1410 and the transceiver module 1420 may be coupled to the storage module. For example, the processing module 1410 may read the instructions (the code or the program) and/or the data in the storage module, to implement the corresponding methods. When the communication apparatus 1400 is the chip in the terminal device, the storage module may be a storage module in the chip, for example, a register or a cache. For example, the storage module may alternatively be a storage module that is in the network device/terminal device and that is located outside the chip, for example, a read-only memory (read-only memory, ROM), another type of static storage device that can store static information and instructions, or a random access memory (random access memory, RAM). The foregoing units may be independently disposed, or may be partially or completely integrated.

In a possible implementation, the processing module 1410 may be a processor or a controller, for example, may be a general-purpose central processing unit (central processing unit, CPU), a general-purpose processor, a digital signal processor (digital signal processing, DSP), an application specific integrated circuit (application specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a DSP and a microprocessor. The transceiver module 1420 is a transceiver, an interface circuit, a bus, a pin, or another possible communication interface, and is configured to receive a signal from another apparatus. For example, when the apparatus is implemented in a form of a chip, the transceiver module 1420 is an interface circuit used by the chip to receive a signal from another chip or apparatus, or is an interface circuit used by the chip to send a signal to another chip or apparatus.

For example, the communication apparatus 1400 can correspondingly implement behavior and functions of the network device in the foregoing method embodiments. The communication apparatus 1400 may be a network device, may be a component (for example, a chip or a circuit) used in the network device, may be a chip or a chip group in the network device or a part used by the chip to perform a related method function, or may be a software module that can implement the method performed by the network device in the foregoing methods (for example, any method in the method 300, the method 1000, and the method 1100). This is not limited.

In an implementation, the processing module 1410 is configured to obtain a first signal, where the first signal includes a first modulation symbol sequence. The transceiver module 1420 is configured to send at least one energy charging signal. The energy charging signal includes a second modulation symbol sequence, and the second modulation symbol sequence is obtained based on a result of conjugating at least one modulation symbol in the first modulation symbol sequence.

In another implementation, the energy charging method includes: the transceiver module 1420, configured to receive a first signal, and send at least one energy charging signal. The first signal is a reflected signal of a second signal sent by the communication apparatus 1400. The first signal includes a first modulation symbol sequence. The energy charging signal includes a second modulation symbol sequence, and the second modulation symbol sequence is obtained by conjugating at least one modulation symbol in the first modulation symbol sequence.

In an optional implementation, a first modulation symbol in the second modulation symbol sequence is a conjugate of a second modulation symbol in the first modulation symbol sequence; the first modulation symbol in the second modulation symbol sequence is obtained by performing conjugation and amplitude scaling on the second modulation symbol in the first modulation symbol sequence; or the second modulation symbol sequence is obtained by performing conjugation and weighted averaging on at least two modulation symbols in the first modulation symbol sequence.

In an optional implementation, the second modulation symbol sequence is obtained by conjugating at least two modulation symbols in the first modulation symbol sequence and then performing sequence reversal.

In an optional implementation, the first modulation symbol sequence is a modulation symbol sequence obtained by performing channel estimation on the first signal.

In an optional implementation, the transceiver module 1420 is further configured to receive first indication information, where the first indication information indicates that the first signal is used to request energy charging.

In an optional implementation, the first signal is carried on a first time-frequency resource, and the first time-frequency resource is used to transmit an energy charging request signal.

In an optional implementation, the transceiver module 1420 is further configured to send configuration information, where the configuration information indicates a second time-frequency resource, and the second time-frequency resource is used to transmit an energy charging request signal.

In an optional implementation, each modulation symbol in the first modulation symbol sequence is a superposition of modulation symbols from a plurality of terminal devices.

In an optional implementation, the transceiver module 1420 is further configured to send a second signal, where the first signal is a reflected signal of the second signal.

In an optional implementation, a subcarrier occupied by the first signal and a subcarrier occupied by the second signal are spaced by $k$ subcarriers, and $k$ is an integer.

In an optional implementation, the transceiver module 1420 is further configured to send second indication information, where the second indication information indicates k.

In an optional implementation, the first signal is from a plurality of terminal devices, the plurality of terminal devices include a first terminal device and a second terminal device, the first signal includes a first component and a second component, the first component corresponds to the first terminal device, and the second component corresponds to the second terminal device. A subcarrier occupied by the first component and the subcarrier occupied by the second signal are spaced by k1 subcarriers, a subcarrier occupied by the second component and the subcarrier occupied by the second signal are spaced by k2 subcarriers, k1 and k2 are different, and k1 and k2 are both integers.

In an optional implementation, the transceiver module 1420 is further configured to send third indication information, where the third indication information indicates k1; and the transceiver module 1420 is further configured to send fourth indication information, where the fourth indication information indicates k2.

The transceiver module 1420 is further configured to: A time domain start position of the second modulation symbol sequence and a time domain end position of the first modulation symbol sequence are spaced by n symbols, and n is an integer greater than or equal to 0.

In an optional implementation, the transceiver module 1420 is further configured to send fifth indication information, where the fifth indication information indicates n.

In an optional implementation, the second modulation symbol sequence is consecutive in time domain, or the second modulation symbol sequence is discrete in time domain.

In an optional implementation, a subcarrier occupied by the second modulation symbol sequence and a subcarrier occupied by the first modulation symbol sequence are spaced by m subcarriers, and m is an integer.

In an optional implementation, the transceiver module 1420 is further configured to send sixth indication information, where the sixth indication information indicates m.

In an optional implementation, the first modulation symbol sequence occupies a plurality of subcarriers, and the second modulation symbol sequence occupies at least one of the plurality of subcarriers.

In an optional implementation, the first modulation symbol in the first modulation symbol sequence is received through a $p^{th}$ antenna, and the second modulation symbol in the second modulation symbol sequence is sent through the $p^{th}$ antenna.

For another example, the communication apparatus 1400 can correspondingly implement behavior and functions of the network device in the foregoing method embodiments. The communication apparatus 1400 may be a terminal device, may be a component (for example, a chip or a circuit) used in the terminal device, may be a chip or a chip group in the terminal device or a part used by the chip to perform a related method function, or may be a software module that can implement the method performed by the terminal device in the foregoing methods (for example, any method in the method 300, the method 1000, and the method 1100). This is not limited.

In an implementation, the transceiver module 1420 is configured to: send a first signal, and receive at least one energy charging signal. The first signal includes a first modulation symbol sequence. The energy charging signal includes a second modulation symbol sequence, and the second modulation symbol sequence is obtained based on a result of conjugating at least one modulation symbol in the first modulation symbol sequence.

In another implementation, the transceiver module 1420 is configured to: receive a second signal, reflect the second signal, and receive the at least one energy charging signal. The energy charging signal includes a second modulation symbol sequence, and the second modulation symbol sequence is obtained based on a result of conjugating at least one modulation symbol in the first modulation symbol sequence. The first modulation symbol sequence is included in a first signal. The first signal is a reflected signal of the second signal.

In an optional implementation, a first modulation symbol in the second modulation symbol sequence is a conjugate of a second modulation symbol in the first modulation symbol sequence; the first modulation symbol in the second modulation symbol sequence is obtained by performing conjugation and amplitude scaling on the second modulation symbol in the first modulation symbol sequence; or the second modulation symbol sequence is obtained by performing conjugation and weighted averaging on at least two modulation symbols in the first modulation symbol sequence.

In an optional implementation, the second modulation symbol sequence is obtained by conjugating at least two modulation symbols in the first modulation symbol sequence and then performing sequence reversal.

In an optional implementation, the first modulation symbol sequence is a modulation symbol sequence obtained by performing channel estimation on the first signal.

In an optional implementation, the transceiver module 1420 is further configured to send first indication information, where the first indication information indicates that the first signal is used to request energy charging.

In an optional implementation, the first signal is carried on a first time-frequency resource, and the first time-frequency resource is used to transmit an energy charging request signal.

In an optional implementation, the transceiver module 1420 is further configured to receive configuration information, where the configuration information indicates a second time-frequency resource, and the second time-frequency resource is used to transmit an energy charging request signal.

In an optional implementation, each modulation symbol in the first modulation symbol sequence is a superposition of modulation symbols from a plurality of terminal devices.

In an optional implementation, the first signal is a reflected signal of the second signal, and the second signal is from a network device.

In an optional implementation, a subcarrier occupied by the first signal and a subcarrier occupied by the second signal are spaced by $k$ subcarriers, and $k$ is an integer.

In an optional implementation, the transceiver module 1420 is further configured to receive second indication information, where the second indication information indicates $k$.

In an optional implementation, the first signal is from a plurality of terminal devices, the plurality of terminal devices include a first terminal device and a second terminal device, the first signal includes a first component and a second component, the first component corresponds to the first terminal device, and the second component corresponds to the second terminal device. A subcarrier occupied by the first component and the subcarrier occupied by the second signal are spaced by $k1$ subcarriers, a subcarrier occupied by the second component and the subcarrier occupied by the second signal are spaced by $k2$ subcarriers, $k1$ and $k2$ are different, and $k1$ and $k2$ are both integers.

In an optional implementation, the transceiver module 1420 is further configured to receive third indication information, where the third indication information indicates $k1$; and the transceiver module 1420 is further configured to receive fourth indication information, where the fourth indication information indicates $k2$.

In an optional implementation, a time domain start position of the second modulation symbol sequence and a time domain end position of the first modulation symbol sequence are spaced by n symbols, and n is an integer greater than or equal to 0.

In an optional implementation, the transceiver module 1420 is further configured to receive fifth indication information, where the fifth indication information indicates n.

In an optional implementation, the second modulation symbol sequence is consecutive in time domain, or the second modulation symbol sequence is discrete in time domain.

In an optional implementation, a subcarrier occupied by the second modulation symbol sequence and a subcarrier occupied by the first modulation symbol sequence are spaced by m subcarriers, and m is an integer.

In an optional implementation, the transceiver module 1420 is further configured to receive sixth indication information, where the sixth indication information indicates m.

In an optional implementation, the first modulation symbol sequence occupies a plurality of subcarriers, and the second modulation symbol sequence occupies at least one of the plurality of subcarriers.

In an optional implementation, the first modulation symbol in the first modulation symbol sequence is received through a $p^{th}$ antenna, and the second modulation symbol in the second modulation symbol sequence is sent through the $p^{th}$ antenna.

When the communication apparatus 1400 is a chip-type apparatus or circuit, the transceiver module may be an input/output circuit and/or a communication interface, and the processing module is an integrated processor, a microprocessor, or an integrated circuit.

FIG. 15 is a block diagram of a communication apparatus 1500 according to an embodiment of this application. The communication apparatus 1500 may be the network device or the terminal device in the foregoing embodiments. For example, the communication apparatus 1500 may be the network device or the terminal device in FIG. 1. Alternatively, the communication apparatus 1500 is a chip (system) in the network device or the terminal device. In this embodiment of this application, the chip system may include a chip, or may include a chip and another discrete component. For a specific function, refer to the descriptions of the foregoing method embodiments.

The communication apparatus 1500 includes one or more processors 1501, configured to implement or support the communication apparatus 1500 in implementing the function of the terminal device or the network device in the methods provided in embodiments of this application. For details, refer to the detailed descriptions in the method example. Details are not described herein again. The processor 1501 may also be referred to as a processing unit or a processing module, and may implement a specific control function. The processor 1501 may be a general-purpose processor, a dedicated processor, or the like, for example, a baseband processor, a central processing unit, an application processor, a modem processor, a graphics processing unit, an image signal processor, a digital signal processor, a video codec processor, a controller, a memory, and/or a neural network processor. The baseband processor may be configured to process a communication protocol and communication data. The central processing unit may be configured to: control the communication apparatus 1500 (for example, a network apparatus or a terminal apparatus), execute a software program, and/or process data. Different processors may be independent devices, or may be integrated into one or more processors, for example, integrated into one or more application-specific integrated circuits.

In a design, the processor 1501 may include a program 1503 (which may also be referred to as code or instructions sometimes). The program 1503 may be run on the processor 1501, to enable the communication apparatus 1500 to perform the method described in the following embodiments. In another possible design, the communication apparatus 1500 includes a circuit (not shown in FIG. 15), and the circuit is configured to implement the function of the network device or the terminal device in the foregoing embodiments.

In a design, the communication apparatus 1500 may include one or more memories 1502, and the memories 1502 store a program 1504 (which may also be referred to as code or instructions sometimes). The program 1504 may be run on the processor 1501, so that the communication apparatus 1500 performs the method described in the foregoing method embodiments, for example, the procedures shown in one or more of FIG. 3, FIG. 10, and FIG. 11.

In a design, the processor 1501 and/or the memory 1502 may include an artificial intelligence (artificial intelligence, AI) module 1507 and an AI module 15010. The AI module is configured to implement an AI-related function. The AI module may be implemented by using software, hardware, or a combination of software and hardware. For example, the AI module may include a RAN intelligent controller (RAN intelligent controller, RIC) module. For example, the AI module may be a near-real-time RIC or a non-real-time RIC.

In a possible design, the processor 1501 and/or the memory 1502 may further store data. The processor and the memory may be separately disposed, or may be integrated together.

In a possible design, the communication apparatus 1500 may further include a transceiver 1505 and/or an antenna 1506. The processor 1501 may also be referred to as a processing unit sometimes, and controls the communication apparatus 1500. The transceiver 1505 may also be referred to as a transceiver unit, a transceiver machine, a transceiver circuit, a transceiver, or the like sometimes, and is configured to implement a transceiver function of the communication apparatus through the antenna 1506.

In a possible design, the communication apparatus 1500 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. It may be understood that, in some embodiments, the communication apparatus 1500 may include more or fewer components, or some components are integrated, or some components are split. The components may be implemented by hardware, software, or a combination of the software and the hardware.

The communication apparatus in the foregoing embodiments may be a terminal device (or a network device), may be a circuit, or may be a chip used in the terminal device (or the network device), or another combined device, component, or the like that has the terminal device (or the network device). When the communication apparatus is the terminal device (or the network device), the transceiver module may be a transceiver, and may include an antenna, a radio frequency circuit, and the like, and the processing module may be a processor, for example, a CPU. When the communication apparatus is the component having the function of the terminal device (or the network device), the transceiver module may be a radio frequency unit, and the processing module may be the processor. When the communication apparatus is a chip system, the communication apparatus may be an FPGA, a dedicated ASIC, a system on a chip (system on a chip, SoC), a CPU, a network processor (network processor, NP), a DSP, a micro controller unit (micro controller unit, MCU), a programmable controller (programmable logic device, PLD), or another integrated chip. The processing module may be a processor of the chip system. The transceiver module or a communication interface may be an input/output interface or an interface circuit of the chip system. For example, the interface circuit may be a code/data read/write interface circuit. The interface circuit may be configured to receive code instructions (where the code instructions are stored in the memory, and may be directly read from the memory, or may be read from the memory through another device) and transmit the code instructions to the processor. The processor may be configured to run the code instructions to perform the method in the foregoing method embodiments. For another example, the interface circuit may alternatively be a signal transmission interface circuit between a communication processor and a transceiver machine.

An embodiment of this application further provides a communication system. Specifically, the communication system includes a network device and a terminal device. For example, the communication system includes a terminal device and a network device that are configured to implement related functions in FIG. 3. Alternatively, the communication system includes a terminal device and a network device that are configured to implement related functions in FIG. 10. Alternatively, the communication system includes a terminal device and a network device that are configured to implement related functions in FIG. 11. For details, refer to the related descriptions in the foregoing method embodiments. Details are not described herein again.

An embodiment of this application further provides a computer-readable storage medium, including instructions. When the instructions are run on a computer, the computer is enabled to perform the method performed by the terminal device or the network device in FIG. 3, FIG. 10, or FIG. 11.

An embodiment of this application further provides a computer program product, including instructions. When the computer program product runs on a computer, the computer is enabled to perform the method performed by the terminal device or the network device in FIG. 3, FIG. 10, or FIG. 11.

An embodiment of this application provides a chip system. The chip system includes a processor, may further include a memory, and is configured to implement a function of the terminal apparatus or the network apparatus in the foregoing methods. The chip system may include a chip, or may include a chip and another discrete component.

To implement the functions of the communication apparatuses in FIG. 14 and FIG. 15, an embodiment of this application further provides a chip, including a processor, configured to support the communication apparatus in implementing the functions of the terminal device or the network device in the foregoing method embodiments. In a possible design, the chip is connected to a memory, or the chip includes a memory. The memory is configured to store a computer program or instructions and data that are necessary for the communication apparatus.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, illustrative logical blocks (illustrative logical blocks) and steps (steps) described with reference to embodiments disclosed in this specification may be implemented by electronic hardware, computer software, or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

When the functions are implemented in the form of a software functional unit and sold or used as an independent product, the functions may be stored in a computer-readable storage medium. Based on this understanding, a part that essentially contributes to the technical solutions of this application or a part of the technical solutions may be embodied in a form of a software product. The computer software product is stored in a storage medium, and includes several instructions for enabling a computer device (which may be a personal computer, a server, a network device, or the like) to perform all or some steps of the methods in embodiments of this application. The foregoing storage medium includes any medium, for example, a USB flash drive, a removable hard disk drive, a read-only memory (read-only memory, ROM), a RAM, a magnetic disk, or an optical disc, that can store program code.

It is clear that a person skilled in the art can make various modifications and variations to this application without departing from the scope of this application. This application is intended to cover these modifications and variations of this application provided that they fall within the scope of protection defined by the following claims and their equivalent technologies.

**Claims**

1. A wireless energy charging method, comprising:

    obtaining a first signal, wherein the first signal comprises a first modulation symbol sequence; and
    sending at least one energy charging signal, wherein the energy charging signal comprises a second modulation symbol sequence, and the second modulation symbol sequence is obtained based on a result of conjugating at least one modulation symbol in the first modulation symbol sequence.

2. The method according to claim 1, wherein that the second modulation symbol sequence is obtained based on the result of conjugating the at least one modulation symbol in the first modulation symbol sequence comprises:

    a first modulation symbol in the second modulation symbol sequence is a conjugate of a second modulation symbol in the first modulation symbol sequence;
the first modulation symbol in the second modulation symbol sequence is obtained by performing conjugation and amplitude scaling on the second modulation symbol in the first modulation symbol sequence; or
the second modulation symbol sequence is obtained by performing conjugation and weighted averaging on at least two modulation symbols in the first modulation symbol sequence.

3. The method according to claim 2, wherein that the second modulation symbol sequence is obtained based on the result of conjugating the at least one modulation symbol in the first modulation symbol sequence further comprises:
the second modulation symbol sequence is obtained by conjugating at least two modulation symbols in the first modulation symbol sequence and then performing sequence reversal.

4. The method according to any one of claims 1 to 3, wherein the first modulation symbol sequence is a modulation symbol sequence obtained by performing channel estimation on the first signal.

5. The method according to any one of claims 1 to 4, wherein the method further comprises:
receiving first indication information, wherein the first indication information indicates that the first signal is used to request energy charging.

6. The method according to any one of claims 1 to 4, wherein the first signal is carried on a first time-frequency resource, and the first time-frequency resource is used to transmit an energy charging request signal.

7. The method according to any one of claims 1 to 6, wherein the method further comprises:
sending configuration information, wherein the configuration information indicates a second time-frequency resource, and the second time-frequency resource is used to transmit an energy charging request signal.

8. The method according to any one of claims 1 to 7, wherein each modulation symbol in the first modulation symbol sequence is a superposition of modulation symbols from a plurality of terminal devices.

9. The method according to any one of claims 1 to 8, wherein the method further comprises:
sending a second signal, wherein the first signal is a reflected signal of the second signal.

**10.** The method according to claim 9, wherein a subcarrier occupied by the first signal and a subcarrier occupied by the second signal are spaced by $k$ subcarriers, and $k$ is an integer.

**11.** The method according to claim 9 or 10, wherein the first signal is from a plurality of terminal devices, the plurality of terminal devices comprise a first terminal device and a second terminal device, the first signal comprises a first component and a second component, the first component corresponds to the first terminal device, and the second component corresponds to the second terminal device; and
a subcarrier occupied by the first component and the subcarrier occupied by the second signal are spaced by $k1$ subcarriers, a subcarrier occupied by the second component and the subcarrier occupied by the second signal are spaced by $k2$ subcarriers, $k1$ and $k2$ are different, and $k1$ and $k2$ are both integers.

**12.** The method according to any one of claims 1 to 11, wherein a time domain start position of the second modulation symbol sequence and a time domain end position of the first modulation symbol sequence are spaced by n symbols, and n is an integer greater than or equal to 0.

**13.** The method according to any one of claims 1 to 12, wherein the second modulation symbol sequence is consecutive in time domain, or the second modulation symbol sequence is discrete in time domain.

**14.** The method according to any one of claims 1 to 13, wherein a subcarrier occupied by the second modulation symbol sequence and a subcarrier occupied by the first modulation symbol sequence are spaced by m subcarriers, and m is an integer.

**15.** The method according to any one of claims 1 to 14, wherein the first modulation symbol sequence occupies a plurality of subcarriers, and the second modulation symbol sequence occupies at least one of the plurality of subcarriers.

**16.** The method according to any one of claims 1 to 15, wherein the first modulation symbol in the first modulation symbol sequence is received through a $p^{th}$ antenna, the second modulation symbol in the second modulation symbol sequence is sent through the $p^{th}$ antenna, and $p$ is an integer greater than or equal to 0.

**17.** A wireless energy charging method, comprising:

sending a first signal, wherein the first signal comprises a first modulation symbol sequence; and
receiving at least one energy charging signal, wherein the energy charging signal comprises a second modulation symbol sequence, and the second modulation symbol sequence is obtained based on a result of conjugating at least one modulation symbol in the first modulation symbol sequence.

**18.** The method according to claim 17, wherein that the second modulation symbol sequence is obtained based on the result of conjugating the at least one modulation symbol in the first modulation symbol sequence comprises:

a first modulation symbol in the second modulation symbol sequence is a conjugate of a second modulation symbol in the first modulation symbol sequence;
the first modulation symbol in the second modulation symbol sequence is obtained by performing conjugation and amplitude scaling on the second modulation symbol in the first modulation symbol sequence; or
the second modulation symbol sequence is obtained by performing conjugation and weighted averaging on at least two modulation symbols in the first modulation symbol sequence.

**19.** The method according to claim 18, wherein that the second modulation symbol sequence is obtained based on the result of conjugating the at least one modulation symbol in the first modulation symbol sequence further comprises:
the second modulation symbol sequence is obtained by conjugating at least two modulation symbols in the first modulation symbol sequence and then performing sequence reversal.

**20.** The method according to any one of claims 17 to 19, wherein the first modulation symbol sequence is a modulation symbol sequence obtained by performing channel estimation on the first signal.

**21.** The method according to any one of claims 17 to 20, wherein the method further comprises:
sending first indication information, wherein the first indication information indicates that the first signal is used to request energy charging.

**22.** The method according to any one of claims 17 to 21, wherein the first signal is carried on a first time-frequency resource, and the first time-frequency resource is used to transmit an energy charging request signal.

**23.** The method according to any one of claims 17 to 22, wherein the method further comprises:
receiving configuration information, wherein the configuration information indicates a second time-frequency resource, and the second time-frequency resource is used to transmit an energy charging request signal.

24. The method according to any one of claims 17 to 23, wherein each modulation symbol in the first modulation symbol sequence is a superposition of modulation symbols from a plurality of terminal devices.

25. The method according to any one of claims 17 to 24, wherein the method further comprises:
   receiving a second signal, wherein the first signal is a reflected signal of the second signal.

26. The method according to claim 25, wherein a subcarrier occupied by the first signal and a subcarrier occupied by the second signal are spaced by $k$ subcarriers, and $k$ is an integer.

27. The method according to claim 25 or 26, wherein the first signal is from a plurality of terminal devices, the plurality of terminal devices comprise a first terminal device and a second terminal device, the first signal comprises a first component and a second component, the first component corresponds to the first terminal device, and the second component corresponds to the second terminal device; and
   a subcarrier occupied by the first component and the subcarrier occupied by the second signal are spaced by $k1$ subcarriers, a subcarrier occupied by the second component and the subcarrier occupied by the second signal are spaced by $k2$ subcarriers, $k1$ and $k2$ are different, and $k1$ and $k2$ are both integers.

28. The method according to any one of claims 17 to 27, wherein a time domain start position of the second modulation symbol sequence and a time domain end position of the first modulation symbol sequence are spaced by n symbols, and n is an integer greater than or equal to 0.

29. The method according to any one of claims 17 to 28, wherein the second modulation symbol sequence is consecutive in time domain, or the second modulation symbol sequence is discrete in time domain.

30. The method according to any one of claims 17 to 29, wherein a subcarrier occupied by the second modulation symbol sequence and a subcarrier occupied by the first modulation symbol sequence are spaced by m subcarriers, and m is an integer.

31. The method according to any one of claims 17 to 30, wherein the first modulation symbol sequence occupies a plurality of subcarriers, and the second modulation symbol sequence occupies at least one of the plurality of subcarriers.

32. The method according to any one of claims 17 to 31, wherein the first modulation symbol in the first modulation symbol sequence is received through a $p^{th}$ antenna, the second modulation symbol in the second modulation symbol sequence is sent through the $p^{th}$ antenna, and $p$ is an integer greater than or equal to 0.

33. A wireless energy charging method, comprising:

   receiving a first signal, wherein the first signal is a reflected signal of a second signal sent by a network device, and the first signal comprises a first modulation symbol sequence; and
   sending at least one energy charging signal, wherein the energy charging signal comprises a second modulation symbol sequence, and the second modulation symbol sequence is obtained based on a result of conjugating at least one modulation symbol in the first modulation symbol sequence.

34. The method according to claim 33, wherein that the second modulation symbol sequence is obtained based on the result of conjugating the at least one modulation symbol in the first modulation symbol sequence comprises:

   a first modulation symbol in the second modulation symbol sequence is a conjugate of a second modulation symbol in the first modulation symbol sequence;
   the first modulation symbol in the second modulation symbol sequence is obtained by performing conjugation and amplitude scaling on the second modulation symbol in the first modulation symbol sequence; or
   the second modulation symbol sequence is obtained by performing conjugation and weighted averaging on at least two modulation symbols in the first modulation symbol sequence.

35. The method according to claim 33 or 34, wherein a time domain start position of the second modulation symbol sequence and a time domain end position of the first modulation symbol sequence are spaced by n symbols, and n is an integer greater than or equal to 0.

36. The method according to any one of claims 33 to 35, wherein a subcarrier occupied by the second modulation symbol sequence and a subcarrier occupied by the first modulation symbol sequence are spaced by m subcarriers, and m is an integer.

37. The method according to any one of claims 33 to 36, wherein the second modulation symbol sequence is consecutive in time domain, or the second modulation symbol sequence is discrete in time domain.

38. The method according to any one of claims 33 to 37, wherein the first modulation symbol in the first modulation symbol sequence is received through a $p^{th}$ antenna, the second modulation symbol in the second modulation symbol sequence is sent through the $p^{th}$ antenna, and $p$ is an integer greater than or equal to 0.

39. A wireless energy charging method, comprising:

receiving a second signal;
reflecting the second signal; and
receiving at least one energy charging signal, wherein the energy charging signal comprises a second modulation symbol sequence, the second modulation symbol sequence is obtained based on a result of conjugating at least one modulation symbol in a first modulation symbol sequence, the first modulation symbol sequence is comprised in a first signal, and the first signal is a reflected signal of the second signal.

40. The method according to claim 39, wherein that the second modulation symbol sequence is obtained based on the result of conjugating the at least one modulation symbol in the first modulation symbol sequence comprises:

a first modulation symbol in the second modulation symbol sequence is a conjugate of a second modulation symbol in the first modulation symbol sequence;
the first modulation symbol in the second modulation symbol sequence is obtained by performing conjugation and amplitude scaling on the second modulation symbol in the first modulation symbol sequence; or
the second modulation symbol sequence is obtained by performing conjugation and weighted averaging on at least two modulation symbols in the first modulation symbol sequence.

41. The method according to claim 39 or 40, wherein a time domain start position of the second modulation symbol sequence and a time domain end position of the first modulation symbol sequence are spaced by n symbols, and n is an integer greater than or equal to 0.

42. The method according to any one of claims 39 to 41, wherein a subcarrier occupied by the second modulation symbol sequence and a subcarrier occupied by the first modulation symbol sequence are spaced by m subcarriers, and m is an integer.

43. The method according to any one of claims 39 to 42, wherein the second modulation symbol sequence is consecutive in time domain, or the second modulation symbol sequence is discrete in time domain.

44. The method according to any one of claims 39 to 43, wherein the first modulation symbol in the first modulation symbol sequence is received through a $p^{th}$ antenna, the second modulation symbol in the second modulation symbol sequence is sent through the $p^{th}$ antenna, and $p$ is an integer greater than or equal to 0.

45. A communication apparatus, comprising a transceiver module and a processing module, wherein

the processing module is configured to obtain a first signal, wherein the first signal comprises a first modulation symbol sequence; and
the transceiver module is configured to send at least one energy charging signal, wherein the energy charging signal comprises a second modulation symbol sequence, and the second modulation symbol sequence is obtained based on a result of conjugating at least one modulation symbol in the first modulation symbol sequence.

46. The apparatus according to claim 45, wherein that the second modulation symbol sequence is obtained based on the result of conjugating the at least one modulation symbol in the first modulation symbol sequence comprises:

a first modulation symbol in the second modulation symbol sequence is a conjugate of a second modulation symbol in the first modulation symbol sequence;
the first modulation symbol in the second modulation symbol sequence is obtained by performing conjugation and amplitude scaling on the second modulation symbol in the first modulation symbol sequence; or
the second modulation symbol sequence is obtained by performing conjugation and weighted averaging on at least two modulation symbols in the first modulation symbol sequence.

47. The apparatus according to claim 46, wherein that the second modulation symbol sequence is obtained based on the result of conjugating the at least one modulation symbol in the first modulation symbol sequence further comprises:
the second modulation symbol sequence is obtained by conjugating at least two modulation symbols in the first modulation symbol sequence and then performing sequence reversal.

**48.** The apparatus according to any one of claims 45 to 47, wherein the first modulation symbol sequence is a modulation symbol sequence obtained by performing channel estimation on the first signal.

**49.** The apparatus according to any one of claims 45 to 48, wherein the transceiver module is further configured to:
receive first indication information, wherein the first indication information indicates that the first signal is used to request energy charging.

**50.** The apparatus according to any one of claims 45 to 48, wherein the first signal is carried on a first time-frequency resource, and the first time-frequency resource is used to transmit an energy charging request signal.

**51.** The apparatus according to any one of claims 45 to 50, wherein the transceiver module is further configured to:
send configuration information, wherein the configuration information indicates a second time-frequency resource, and the second time-frequency resource is used to transmit an energy charging request signal.

**52.** The apparatus according to any one of claims 45 to 51, wherein each modulation symbol in the first modulation symbol sequence is a superposition of modulation symbols from a plurality of terminal devices.

**53.** The apparatus according to any one of claims 45 to 52, wherein the transceiver module is further configured to:
send a second signal, wherein the first signal is a reflected signal of the second signal.

**54.** The apparatus according to claim 53, wherein a subcarrier occupied by the first signal and a subcarrier occupied by the second signal are spaced by $k$ subcarriers, and $k$ is an integer.

**55.** The apparatus according to claim 53 or 54, wherein the first signal is from a plurality of terminal devices, the plurality of terminal devices comprise a first terminal device and a second terminal device, the first signal comprises a first component and a second component, the first component corresponds to the first terminal device, and the second component corresponds to the second terminal device; and
a subcarrier occupied by the first component and the subcarrier occupied by the second signal are spaced by $k1$ subcarriers, a subcarrier occupied by the second component and the subcarrier occupied by the second signal are spaced by $k2$ subcarriers, $k1$ and $k2$ are different, and $k1$ and $k2$ are both integers.

**56.** The apparatus according to any one of claims 45 to 55, wherein a time domain start position of the second modulation symbol sequence and a time domain end position of the first modulation symbol sequence are spaced by n symbols, and n is an integer greater than or equal to 0.

**57.** The apparatus according to any one of claims 45 to 56, wherein the second modulation symbol sequence is consecutive in time domain, or the second modulation symbol sequence is discrete in time domain.

**58.** The apparatus according to any one of claims 45 to 57, wherein a subcarrier occupied by the second modulation symbol sequence and a subcarrier occupied by the first modulation symbol sequence are spaced by m subcarriers, and m is an integer.

**59.** The apparatus according to any one of claims 45 to 58, wherein the first modulation symbol sequence occupies a plurality of subcarriers, and the second modulation symbol sequence occupies at least one of the plurality of subcarriers.

**60.** The apparatus according to any one of claims 45 to 59, wherein the first modulation symbol in the first modulation symbol sequence is received through a $p^{th}$ antenna, the second modulation symbol in the second modulation symbol sequence is sent through the $p^{th}$ antenna, and $p$ is an integer greater than or equal to 0.

**61.** A communication apparatus, comprising a transceiver module and a processing module, wherein

the processing module is configured to determine a first signal, wherein the first signal comprises a first modulation symbol sequence; and
the transceiver module is configured to send the first signal, and receive at least one energy charging signal, wherein the energy charging signal comprises a second modulation symbol sequence, and the second modulation symbol sequence is obtained based on a result of conjugating at least one modulation symbol in the first modulation symbol sequence.

**62.** The apparatus according to claim 61, wherein that the second modulation symbol sequence is obtained based on the result of conjugating the at least one modulation symbol in the first modulation symbol sequence comprises:

a first modulation symbol in the second modulation symbol sequence is a conjugate of a second modulation symbol in the first modulation symbol sequence;

the first modulation symbol in the second modulation symbol sequence is obtained by performing conjugation and amplitude scaling on the second modulation symbol in the first modulation symbol sequence; or

the second modulation symbol sequence is obtained by performing conjugation and weighted averaging on at least two modulation symbols in the first modulation symbol sequence.

63. The apparatus according to claim 62, wherein that the second modulation symbol sequence is obtained based on the result of conjugating the at least one modulation symbol in the first modulation symbol sequence further comprises:

the second modulation symbol sequence is obtained by conjugating at least two modulation symbols in the first modulation symbol sequence and then performing sequence reversal.

64. The apparatus according to any one of claims 61 to 63, wherein the first modulation symbol sequence is a modulation symbol sequence obtained by performing channel estimation on the first signal.

65. The apparatus according to any one of claims 61 to 64, wherein the apparatus further comprises:
sending first indication information, wherein the first indication information indicates that the first signal is used to request energy charging.

66. The apparatus according to any one of claims 61 to 65, wherein the first signal is carried on a first time-frequency resource, and the first time-frequency resource is used to transmit an energy charging request signal.

67. The apparatus according to any one of claims 61 to 66, wherein the apparatus further comprises:
receiving configuration information, wherein the configuration information indicates a second time-frequency resource, and the second time-frequency resource is used to transmit an energy charging request signal.

68. The apparatus according to any one of claims 61 to 67, wherein each modulation symbol in the first modulation symbol sequence is a superposition of modulation symbols from a plurality of terminal devices.

69. The apparatus according to any one of claims 61 to 68, wherein the apparatus further comprises:
receiving a second signal, wherein the first signal is a reflected signal of the second signal.

70. The apparatus according to claim 69, wherein a subcarrier occupied by the first signal and a subcarrier occupied by the second signal are spaced by $k$ subcarriers, and $k$ is an integer.

71. The apparatus according to claim 69 or 70, wherein the first signal is from a plurality of terminal devices, the plurality of terminal devices comprise a first terminal device and a second terminal device, the first signal comprises a first component and a second component, the first component corresponds to the first terminal device, and the second component corresponds to the second terminal device; and
a subcarrier occupied by the first component and the subcarrier occupied by the second signal are spaced by $k1$ subcarriers, a subcarrier occupied by the second component and the subcarrier occupied by the second signal are spaced by $k2$ subcarriers, $k1$ and $k2$ are different, and $k1$ and $k2$ are both integers.

72. The apparatus according to any one of claims 61 to 71, wherein a time domain start position of the second modulation symbol sequence and a time domain end position of the first modulation symbol sequence are spaced by n symbols, and n is an integer greater than or equal to 0.

73. The apparatus according to any one of claims 61 to 72, wherein the second modulation symbol sequence is consecutive in time domain, or the second modulation symbol sequence is discrete in time domain.

74. The apparatus according to any one of claims 61 to 73, wherein a subcarrier occupied by the second modulation symbol sequence and a subcarrier occupied by the first modulation symbol sequence are spaced by m subcarriers, and m is an integer.

75. The apparatus according to any one of claims 61 to 74, wherein the first modulation symbol sequence occupies a plurality of subcarriers, and the second modulation symbol sequence occupies at least one of the plurality of subcarriers.

76. The apparatus according to any one of claims 61 to 75, wherein the first modulation symbol in the first modulation symbol sequence is received through a $p^{th}$ antenna, the second modulation symbol in the second modulation symbol sequence is sent through the $p^{th}$ antenna, and $p$ is an integer greater than or equal to 0.

77. A communication apparatus, comprising a transceiver module and a processing module, wherein

the transceiver module is configured to receive a first signal, and send at least one energy charging signal, wherein the first signal is a reflected signal of a second signal sent by a network device, the first signal comprises a first modulation symbol sequence, the energy charging signal comprises a second modulation symbol sequence, and the second modulation symbol sequence is obtained based on a result of conjugation on at least one modulation symbol in the first modulation symbol sequence; and the processing module is configured to determine the energy charging signal.

78. The apparatus according to claim 77, wherein that the second modulation symbol sequence is obtained based on the result of conjugating the at least one modulation symbol in the first modulation symbol sequence comprises:

a first modulation symbol in the second modulation symbol sequence is a conjugate of a second modulation symbol in the first modulation symbol sequence;
the first modulation symbol in the second modulation symbol sequence is obtained by performing conjugation and amplitude scaling on the second modulation symbol in the first modulation symbol sequence; or
the second modulation symbol sequence is obtained by performing conjugation and weighted averaging on at least two modulation symbols in the first modulation symbol sequence.

79. The apparatus according to claim 77 or 78, wherein a time domain start position of the second modulation symbol sequence and a time domain end position of the first modulation symbol sequence are spaced by $n$ symbols, and $n$ is an integer greater than or equal to 0.

80. The apparatus according to any one of claims 77 to 79, wherein a subcarrier occupied by the second modulation symbol sequence and a subcarrier occupied by the first modulation symbol sequence are spaced by $m$ subcarriers, and $m$ is an integer.

81. The apparatus according to any one of claims 77 to 80, wherein the second modulation symbol sequence is consecutive in time domain, or the second modulation symbol sequence is discrete in time domain.

82. The apparatus according to any one of claims 77 to 81, wherein the first modulation symbol in the first modulation symbol sequence is received through a $p^{th}$ antenna, the second modulation symbol in the second modulation symbol sequence is sent through the $p^{th}$ antenna, and $p$ is an integer greater than or equal to 0.

83. A wireless energy charging apparatus, comprising a transceiver module and a processing module, wherein

the transceiver module is configured to receive a second signal;
the processing module is configured to reflect the second signal; and
the transceiver module is configured to receive at least one energy charging signal, wherein the energy charging signal comprises a second modulation symbol sequence, the second modulation symbol sequence is obtained based on a result of conjugating at least one modulation symbol in a first modulation symbol sequence, the first modulation symbol sequence is comprised in a first signal, and the first signal is a reflected signal of the second signal.

84. The apparatus according to claim 83, wherein that the second modulation symbol sequence is obtained based on the result of conjugating the at least one modulation symbol in the first modulation symbol sequence comprises:

a first modulation symbol in the second modulation symbol sequence is a conjugate of a second modulation symbol in the first modulation symbol sequence;
the first modulation symbol in the second modulation symbol sequence is obtained by performing conjugation and amplitude scaling on the second modulation symbol in the first modulation symbol sequence; or
the second modulation symbol sequence is obtained by performing conjugation and weighted averaging on at least two modulation symbols in the first modulation symbol sequence.

85. The apparatus according to claim 83 or 84, wherein a time domain start position of the second modulation symbol sequence and a time domain end position of the first modulation symbol sequence are spaced by $n$ symbols, and $n$ is an integer greater than or equal to 0.

86. The apparatus according to any one of claims 83 to 85, wherein a subcarrier occupied by the second modulation symbol sequence and a subcarrier occupied by the first modulation symbol sequence are spaced by $m$ subcarriers, and $m$ is an integer.

87. The apparatus according to any one of claims 83 to 86, wherein the second modulation symbol sequence is consecutive in time domain, or the second modulation symbol sequence is discrete in time domain.

88. The apparatus according to any one of claims 83 to 87, wherein the first modulation symbol in the first modulation symbol sequence is received through a $p^{th}$ antenna, the second modulation symbol in the second modulation symbol sequence is sent through the $p^{th}$ antenna, and $p$ is an integer greater than or equal to 0.

89. A communication apparatus, comprising a processor, wherein the processor is configured to execute one or more computer programs or instructions, so that the method according to any one of claims 1 to 16 is performed by the communication apparatus, or the method according to any one of claims 17 to 32 is performed by the communication apparatus, or the method according to any one of claims 33 to 38 is performed by the communication apparatus, or the method according to any one of claims 39 to 44 is performed by the communication apparatus.

90. A communication system, comprising a first communication apparatus and a second communication apparatus, wherein the first communication apparatus is configured to perform the method according to any one of claims 1 to 16, and the second communication apparatus is configured to perform the method according to any one of claims 17 to 32; or the first communication apparatus is configured to perform the method according to any one of claims 33 to 38, and the second communication apparatus is configured to perform the method according to any one of claims 39 to 44.

91. A computer-readable storage medium, storing a computer program or instructions, wherein the computer program or the instructions are used to implement the method according to any one of claims 1 to 16, or are used to implement the method according to any one of claims 17 to 32, or are used to implement the method according to any one of claims 33 to 38, or are used to implement the method according to any one of claims 39 to 44.

92. A computer program product, wherein the computer program product comprises a computer program, and when the computer program is run on a computer, the method according to any one of claims 1 to 16 is performed by the computer, or the method according to any one of claims 17 to 32 is performed by the computer, or the method according to any one of claims 33 to 38 is performed by the computer, or the method according to any one of claims 39 to 44 is performed by the computer.

FIG. 1

FIG. 2

FIG. 3

FIG. 4

One energy
charging signal

Frequency
domain

First signal

$k^{th}$
subcarrier

| | | | | | | | | |
|---|---|---|---|---|---|---|---|---|
| | | | | | | | | |
| $a_1$ | | $a_2$ | | $a_3$ | $(a_1)^*$ | $(a_2)^*$ | $(a_3)^*$ | |
| | | | | | | | | |

Time domain

FIG. 5

(a)

(b)

(c)

FIG. 6

FIG. 7

FIG. 8

FIG. 9

1000

| Second terminal device | First terminal device | | Network device |
|---|---|---|---|

S1001: Configuration information, where the configuration information indicates a second time-frequency resource, and the second time-frequency resource is used to transmit an energy charging request signal

S1002: First energy charging request signal

S1003: Second energy charging request signal

S1004: Obtain a first modulation symbol sequence based on the first energy charging request signal and the second energy charging request signal

S1005: Conjugate at least one modulation symbol in the first modulation symbol sequence, to obtain a second modulation symbol sequence

S1006: At least one energy charging signal, where the energy charging signal includes the second modulation symbol sequence

FIG. 10

1100

| Terminal device | | Network device |

S1101: Second signal

S1102: Reflect the second signal

S1103: Obtain a first modulation symbol sequence based on a first signal

S1104: Conjugate at least one modulation symbol in the first modulation symbol sequence, to obtain a second modulation symbol sequence

S1105: At least one energy charging signal, where the energy charging signal includes the second modulation symbol sequence

FIG. 11

Frequency domain

Second signal

First signal

$(k+2)^{\text{th}}$ subcarrier

$k^{\text{th}}$ subcarrier

| $a_1$ | | $a_2$ | | $a_3$ | $a_3$ | $a_3$ | $a_3$ | $a_3$ | |

Time domain

FIG. 12

FIG. 13

FIG. 14

FIG. 15

## INTERNATIONAL SEARCH REPORT

| International application No. |
|---|
| **PCT/CN2024/118080** |

**A. CLASSIFICATION OF SUBJECT MATTER**

H02J50/20(2016.01)i

According to International Patent Classification (IPC) or to both national classification and IPC

**B. FIELDS SEARCHED**

Minimum documentation searched (classification system followed by classification symbols)

IPC: H02J

Documentation searched other than minimum documentation to the extent that such documents are included in the fields searched

Electronic data base consulted during the international search (name of data base and, where practicable, search terms used)

CNKI, IEEE, CNTXT, DWPI, ENTXT, ENTXTC: 充电, 电池, 电芯, 无线, 微波, 射频, 调制, 共轭, charging, battery, wireless, microwave, radio, frequency, modulation, conjugate

**C. DOCUMENTS CONSIDERED TO BE RELEVANT**

| Category* | Citation of document, with indication, where appropriate, of the relevant passages | Relevant to claim No. |
|---|---|---|
| X | CN 103915878 A (WANG XIN et al.) 09 July 2014 (2014-07-09) description, paragraphs [0019]-[0050], and figures 1-5 | 1-92 |
| X | CN 106953424 A (OSSIA INC.) 14 July 2017 (2017-07-14) description, paragraphs [0033]-[0090], and figures 1-12 | 1-92 |
| A | CN 114172280 A (NANJING UNIVERSITY OF AERONAUTICS AND ASTRONAUTICS) 11 March 2022 (2022-03-11) entire document | 1-92 |
| A | CN 115102306 A (TSINGHUA UNIVERSITY) 23 September 2022 (2022-09-23) entire document | 1-92 |
| A | US 2010079010 A1 (SEARETE LLC.) 01 April 2010 (2010-04-01) entire document | 1-92 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **12 December 2024** | **17 December 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

International application No.

**PCT/CN2024/118080**

| Patent document cited in search report | | | Publication date (day/month/year) | Patent family member(s) | | | Publication date (day/month/year) |
|---|---|---|---|---|---|---|---|
| CN | 103915878 | A | 09 July 2014 | None | | | |
| CN | 106953424 | A | 14 July 2017 | JP | 2022048193 | A | 25 March 2022 |
| | | | | JP | 7428732 | B2 | 06 February 2024 |
| | | | | US | 2016013685 | A1 | 14 January 2016 |
| | | | | US | 10008887 | B2 | 26 June 2018 |
| | | | | TW | 201601411 | A | 01 January 2016 |
| | | | | TWI | 563767 | B | 21 December 2016 |
| | | | | TW | 201717523 | A | 16 May 2017 |
| | | | | JP | 2020058233 | A | 09 April 2020 |
| | | | | JP | 7405624 | B2 | 26 December 2023 |
| | | | | EP | 3474415 | A1 | 24 April 2019 |
| | | | | WO | 2012027166 | A1 | 01 March 2012 |
| | | | | JP | 2014223018 | A | 27 November 2014 |
| | | | | JP | 6125471 | B2 | 10 May 2017 |
| | | | | KR | 20180116474 | A | 24 October 2018 |
| | | | | KR | 102002624 | B1 | 22 July 2019 |
| | | | | KR | 20210029846 | A | 16 March 2021 |
| | | | | KR | 102391333 | B1 | 26 April 2022 |
| | | | | RU | 2016131457 | A | 07 December 2018 |
| | | | | RU | 2016131457 | A3 | 14 February 2020 |
| | | | | RU | 2719472 | C2 | 17 April 2020 |
| | | | | RU | 2013112936 | A | 27 September 2014 |
| | | | | RU | 2596604 | C2 | 10 September 2016 |
| | | | | TW | 201212462 | A | 16 March 2012 |
| | | | | TWI | 478461 | B | 21 March 2015 |
| | | | | KR | 20200006631 | A | 20 January 2020 |
| | | | | KR | 102227472 | B1 | 15 March 2021 |
| | | | | TW | 201528644 | A | 16 July 2015 |
| | | | | TWI | 499156 | B | 01 September 2015 |
| | | | | US | 2010315045 | A1 | 16 December 2010 |
| | | | | US | 8159364 | B2 | 17 April 2012 |
| | | | | US | 2020185972 | A1 | 11 June 2020 |
| | | | | US | 10897161 | B2 | 19 January 2021 |
| | | | | JP | 2013538548 | A | 10 October 2013 |
| | | | | JP | 5738416 | B2 | 24 June 2015 |
| | | | | US | 2015022022 | A1 | 22 January 2015 |
| | | | | US | 9142973 | B2 | 22 September 2015 |
| | | | | EP | 2609670 | A1 | 03 July 2013 |
| | | | | EP | 2609670 | A4 | 10 May 2017 |
| | | | | EP | 2609670 | B1 | 26 December 2018 |
| | | | | KR | 20140012937 | A | 04 February 2014 |
| | | | | KR | 101762882 | B1 | 04 August 2017 |
| | | | | KR | 20170089940 | A | 04 August 2017 |
| | | | | KR | 101911052 | B1 | 24 October 2018 |
| | | | | US | 2013207604 | A1 | 15 August 2013 |
| | | | | US | 8558661 | B2 | 15 October 2013 |
| | | | | US | 2012193999 | A1 | 02 August 2012 |
| | | | | US | 8410953 | B2 | 02 April 2013 |
| | | | | KR | 20190087664 | A | 24 July 2019 |
| | | | | KR | 102066720 | B1 | 15 January 2020 |

Form PCT/ISA/210 (patent family annex) (July 2022)

**INTERNATIONAL SEARCH REPORT**
Information on patent family members

International application No.

**PCT/CN2024/118080**

| Patent document cited in search report | | | Publication date (day/month/year) | Patent family member(s) | | | Publication date (day/month/year) |
|---|---|---|---|---|---|---|---|
| | | | | US | 2019386521 | A1 | 19 December 2019 |
| | | | | US | 10566846 | B2 | 18 February 2020 |
| | | | | JP | 2023184683 | A | 28 December 2023 |
| | | | | BR | 112013004393 | A2 | 25 August 2020 |
| | | | | BR | 112013004393 | B1 | 21 September 2021 |
| | | | | US | 2017358959 | A1 | 14 December 2017 |
| | | | | US | 10396602 | B2 | 27 August 2019 |
| | | | | JP | 2017139954 | A | 10 August 2017 |
| | | | | JP | 6797061 | B2 | 09 December 2020 |
| | | | | US | 2014035524 | A1 | 06 February 2014 |
| | | | | US | 8854176 | B2 | 07 October 2014 |
| | | | | CN | 103155353 | A | 12 June 2013 |
| | | | | CN | 106877524 | A | 20 June 2017 |
| | | | | CN | 107069905 | A | 18 August 2017 |
| CN | 114172280 | A | 11 March 2022 | None | | | |
| CN | 115102306 | A | 23 September 2022 | None | | | |
| US | 2010079010 | A1 | 01 April 2010 | US | 8168930 | B2 | 01 May 2012 |

Form PCT/ISA/210 (patent family annex) (July 2022)

REFERENCES CITED IN THE DESCRIPTION

**Patent documents cited in the description**

- CN 202311199967